# EUROPEAN PATENT APPLICATION

(11) **EP 4 783 688 A1**
(43) Date of publication of application: **29.07.2026**
(21) Application number: 25153933.4
(22) Date of filing: 24.01.2025
(51) Int. Cl.: H04W 60/00

(54) **METHOD, COMPUTER PROGRAM, AND APPARATUS FOR PROVIDING SERVICES OF MULTIPLE GENERATIONS OF TELECOMMUNICATION SYSTEMS**

(71) Applicant: Deutsche Telekom AG, 53113 Bonn (DE)
(72) Inventor: COLOM IKUNO, Josep, 2100 Korneuburg (AT); AMEND, Markus, 63667 Nidda (DE)
(74) Representative: 2SPL Patentanwälte PartG mbB

(57) **Abstract**

Provided are methods, computer programs, and apparatuses for providing services of multiple generations of telecommunication systems. The method (10) for providing services of multiple generations of telecommunication systems comprises enabling (11) services of a first telecommunication system, wherein the first telecommunication system supports network slicing and wherein the network slices are configurable to pro-vide different service characteristics and supporting (12) a second telecommunication system, the second telecommunication system being a different generation of telecommunication systems than the first telecommunication system. The first telecommunication system being configured to provide access to at least one feature of the second telecommunication system using at least one network slice.

## Description

### Field

The present disclosure relates to methods, computer programs, and apparatuses for providing services of multiple generations of telecommunication systems, more particularly, but not exclusively to a concept for using network slices to provide services of different telecommunication systems.

### Background

Network slicing, as standardized by the third generation Partnership Project (3GPP), represents a transformative concept in mobile network architecture, particularly relevant to 5G (5^{th} generation). It enables operators to create multiple virtualized and independent networks on a shared physical infrastructure, that is, it is possible for an operator to create multiple "tenants" within its own network. Each "slice" is tailored to meet specific service requirements, such as enhanced mobile broadband (eMBB), ultra-reliable low-latency communications (URLLC), or massive machine-type communications (mMTC). Different subscribers can be given access to a differentiated set of slices depending on their service and business requirements. Through network slicing, resources such as bandwidth, compute, and storage can be allocated dynamically to each slice, ensuring that critical applications like autonomous driving or industrial automation receive the necessary performance guarantees. 3GPP has defined network slicing within the broader framework of 5G System Architecture (3GPP Technical Specification (TS) 23.501), emphasizing flexibility and scalability for diverse use cases. More details can be found in 3GPP TS 23.501 V19.2.1 (2025-01), Technical Specification 3rd Generation Partnership Project; Technical Specification Group Services and System Aspects; System architecture for the 5G System (5GS); Stage 2 (Release 19).

Technically, each network slice comprises a combination of network functions (e.g., User Plane Function and Access and Mobility Management Function) orchestrated to deliver end-to-end connectivity and service quality. The slicing concept is especially enabled for virtualization technologies like Network Functions Virtualization (NFV) and Software-Defined Networking (SDN) to enable the creation and management of these slices. This is typically achieved by providing separate instances serving specific slices. As opposed to physical appliances, it is possible to easily dynamically add/remove instances using a virtualization framework, especially when using container-based implementations. A slice can span across the core, transport, and radio access network domains, with 3GPP providing detailed standards for their implementation, including the ability to support multi-tenancy and inter-operator slicing. Additionally, network elements can be shared between slices, such that the operator can flexibly decide the level of separation for each slice. Operators can thus differentiate their services while optimizing network efficiency, offering a strategic advantage in catering to the varied needs of industries and consumers.

### Summary

Examples of the present disclosure are based on the finding that network slicing may also be enhanced to provide different system generations in different network slices. Hence, instead of having to implement a full system according to a different generation of telecommunication system a network slice may be used to offer services of such a system.

Examples provide a method for providing services of multiple generations of telecommunication systems. The method comprises enabling services of a first telecommunication system, wherein the first telecommunication system supports network slicing and wherein the network slices are configurable to provide different service characteristics. The method further comprises supporting a second telecommunication system. The second telecommunication system is or corresponds to a different generation of telecommunication systems than the first telecommunication system. The second telecommunication system might also support network slicing and the network slices of the second telecommunication system might also be configurable to provide different service characteristics. The first telecommunication system is further configured to provide access to at least one feature of the second telecommunication system using at least one network slice.

Examples may provide services of multiple generations of telecommunication systems using a base system (first telecommunication system) with one or more network slices that provide services or at least features of other telecommunication systems (e.g. the second telecommunication system). Examples may hence provide a method for a telecommunication network to provide services of multiple generations of telecommunication systems. In a telecommunication network supporting network slicing, on top of how a slice is currently defined, a slice can be characterized by new features that are currently not possible with current state of the art, such as an enhanced protocol stack for the control plane, an enhanced protocol stack for the user plane, a modular non-access stratum, NAS, enhanced mechanisms, enhanced procedures and/or selective user plane encryption. An enhanced protocol stack may be characterized by a specific protocol or set of protocols such as SRv6 for user plane transport or replacement of SCTP transport with other transport protocols such as HTTP-based transport. Thus, allowing a slice to support a protocol stack or set of protocol stacks not possible in current telecommunication systems. Modular NAS may require a different, enhanced or adapted set of procedures. Thus, allowing a slice to support a different procedure or set of procedures not possible in current telecommunication systems. Enhanced mechanisms may refer to enhanced security mechanisms. Thus, allowing a slice to support a different security mechanism or set of security mechanisms not possible in current telecommunication systems. One or more components of the telecommunication network might be configured to associate one or more of the new features to one or more slices such that such new features can then be requested (e.g. user equipment, UE requests it), assigned (e.g. network tells a UE to use it), provided (e.g. provide services) and/or required (e.g. slice can only be used if a specific feature or features are supported by a UE, the access network and the core network). In this way, the conventional features (those of the first telecommunication system) can still be used while the new feature (that of the second telecommunication system) can be used where available, allowed and supported.

For example, the first telecommunication system is a 5^{th} generation system according to the specifications of the 3^{rd} Generation Partnership Project, 3GPP, and the second telecommunication system is a 6^{th} or higher generation system according to the specifications of the 3GPP. In further examples it may be vice versa, and the higher generation telecommunication system may offer services of a lower generation telecommunication system in a slice. Examples may enable a flexible concept for provision of services of multiple generations of telecommunication systems.

The method may further comprise communicating information on the at least one network slice between a core network, CN, a management system, an access network, AN, especially a radio access network, RAN, and/or UE of the first telecommunication system. That way the involved network components can be kept informed about the slice providing the features of the second telecommunication system and different communication mechanisms for the slice configuration can be enabled. Furthermore, the information on the at least one network slice (configuration) can be stored at a RAN (or AN) node and/or at a UE of the first telecommunication system. Storing the information may enable the involved components (e.g. UE, RAN, and CN) to assign features or services of the at least one slice to a UE, e.g. upon request. The method may further comprise broadcasting information about the at least one network slice by the AN of the first telecommunication system. This enables all UEs covered by the broadcast region to receive the information/configuration of the at least one slice. For example, the method may include communicating an identifier for the at least one network slice or information associated to and/or characterizing the at least one network slice from the UE to the AN for requesting of the at least one network slice, especially based on the stored information on the at least one network slice.

In further examples, a verifying of support capabilities may be carried out. The method may then comprise verifying of network nodes involved (e.g. UE, RAN, and CN) in providing services of the at least one network slice before service provision using the at least one network slice. Examples may thereby ensure that the features or services provided by the at least one network slice comply to the capabilities of the involved nodes. Additionally, it may be ensured that specific procedures or methods (e.g. setup of additional NAS security contexts when using modular NAS) are performed if those are supported in the at least one network slice. The method may further comprise assigning the at least one network slice if the involved network nodes have support capabilities for the least one network slice and otherwise assigning a different network slice for which the involved network nodes have support capabilities.

For example, the at least one network slice is characterized, compared to the first telecommunication system, by one or more elements of the group of an enhanced/specific protocol stack for the control plane, an enhanced/specific protocol stack for the user plane, a modular non-access stratum, NAS, enhanced/specific mechanisms, enhanced/specific procedures or selective user plane encryption. Therewith, enhancements introduced or developed in a different generation of a telecommunication system can be provided within a network slice. Furthermore, enhancements introduced or developed in a different generation of a telecommunication system and provided within a network slice can be offered without detriment to services offered by a different (former) generation of a telecommunication system. Moreover, the first telecommunication system and the second telecommunication system may share components, especially access network, AN, (especially RAN components) and/or CN, components, (especially network functions, NFs), wherein shared components are used by both the first telecommunication system and the second telecommunication system. Hence some components, especially hardware components, may be shared by the telecommunication systems. This may be advantageous in scenarios with software-implemented features such as different protocol stack implementations or protocol versions. It is especially advantageous for systems such as subscriber management systems (e.g. unified data management, UDM, unified data repository, UDR), where an operator can benefit in having a single source of truth for subscriber- (i.e. customer) related information. In some examples the method may comprise converting or reallocating between network functions of the first and second telecommunication systems. That way, dependent on the implemented features a conversion may be possible between the generations, e.g. modular NAS may be aggregated or vice versa. Similarly, it may be possible for a network function implementation to simultaneously support features associated with more than one generation of telecommunication system.

In further examples the method may comprise deciding by a network function of the first telecommunication system, whether a UE is admitted using the at least one network slice, and assigning the UE to a different network slice in case of deciding that the UE is not admitted using the at least one network slice. That way, network slice may be assigned or selected, which a suitable to a request network condition or configuration.

A further example is a computer program having a program code for performing one of the methods described herein, when the computer program is executed on a computer, a processor, or a programmable hardware component.

Yet another example is an apparatus for a telecommunication system. The apparatus comprises one or more interfaces configured to communicate in the telecommunication system and one or more processing devices configured to perform one of the methods described herein. In further examples the apparatus may be comprised in a UE, a RAN node or a CN node of the telecommunication system. Hence, another example in a telecommunication system, which comprises at least one such apparatus.

### Brief description of the Figures

Some examples of apparatuses, methods, and/or computer programs will be described in the following by way of example only, and with reference to the accompanying figures, in which
Fig. 1 shows a flowchart of an example of a method for providing services of multiple generations of telecommunication systems;
Fig. 2 illustrates a block diagram of an example of an apparatus for providing services of multiple generations of telecommunication systems;
Fig. 3 depicts a conventional 5G system at the top and data transmission between UE and a data network at the bottom;
Fig. 4 shows a service-based interface protocol stack in a 5GC system;
Fig. 5 illustrates a disaggregated NAS in an example;
Fig. 6 depicts a protocol overview for disaggregated NAS (modular NAS) in an example;
Fig. 7 shows horizontal key derivation in an example;
Fig. 8 illustrates using HTTP to transport CP in 6G networks in an example at the top and a combination of HTTP/2 and HTTP/3 in an example at the bottom;
Fig. 9 shows application of DTLS to a specific PDU session at the top, different application of DTLS for different PDU sessions in the middle, and application of different cryptographic processing types at different levels at the bottom;
Fig. 10 illustrates porting of 6G enhancements to 5G (legacy NG-AP over HTTP) and 4G (N26 interface) in an example;
Fig. 11 depicts an implementation of 6G without impact on DU, RU;
Fig. 12 shows a 6G-capable network E2E at the top and a 6G-capable UE attaching to non-6G-capable network in an example at the bottom ;
Fig, 13 illustrates a 6G-capable NF serving a 6G-capable UE over a 5G-capable RAN in an example at the top and a 6G-capable NF serving a 5G-capable UE over a 5G-capable RAN in an example at the bottom;
Fig. 14 depicts an example of a RAN configuration at the top and an example of a UE configuration at the bottom; and
Fig. 15 shows a broadcast of 6G-capable slices by RAN in an example.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In general, a telecommunication system refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modern society, supporting services such as mobile communication, internet access, satellite transmission, and broadcasting, enabling global connectivity and access to information.

A network node in a telecommunication system refers to any active, physical or logical device that is responsible for creating, receiving, or transmitting data within a network. These nodes serve as critical points of communication and data transfer, enabling the flow of information across the network. Examples of network nodes include routers, switches, base stations, servers, and user devices like smartphones and computers. Each node plays a specific role, such as directing data traffic, managing network connections, or handling user requests. In a telecommunications system, network nodes are interconnected, often forming a complex mesh that allows for efficient, scalable communication between multiple devices. These nodes can operate on different layers of the OSI (Open Systems Interconnection) model, from physical infrastructure to application services, and are essential for maintaining the integrity, speed, and reliability of communication networks.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs), and core network elements, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G LTE (Long Term Evolution) and 5G, which provide high-speed data transfer, low latency, and improved connectivity. These systems enable various services, including voice calls, text messaging, video streaming, and inter-net access, making them integral to personal, commercial, and industrial communication in to-day's interconnected world.

More details can be found in the 3GPP Technical Specifications (TS), e.g. 3GPP TS 23.501 V19.2.1 (2025-01), System Architecture for the 5G System (5GS), and 3GPP TS 23.502 V19.2.0 (2024-12), Procedures for the 5G System.

The systems specified by 3GPP are complex and the full set of specifications extends over thousands of pages. In the following some examples will be detailed that interact with or can be comprised in 3GPP systems. With respect to further details on technical aspects related to these systems beyond those described subsequently, it is referred to the 3GPP specifications.

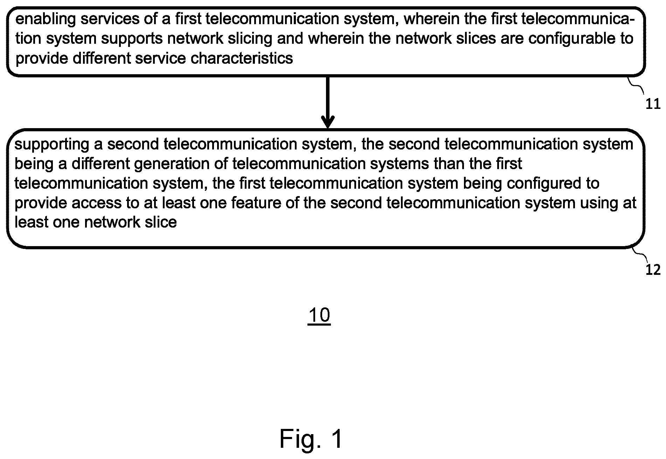

Fig. 1 shows a flowchart of an example of a method 10 for providing services of multiple generations of telecommunication systems. The method 10 comprises enabling 11 services of a first telecommunication system. The first telecommunication system supports network slicing, and the network slices are configurable to provide different service characteristics. Hence, one or more network slices can be configured to provide different services with different characteristics to users. These characteristics may, for example, relate to Quality of Service (QoS) parameters, e.g. bit rate, latency, error rates, etc. Enabling 11 the services from an infrastructure perspective can be understood as providing network services from a base station supported by core network functions that allow to establish network slices. From a UE perspective the enabling 11 can be understood as providing the ability to register or use different network slices with different service characteristics. The different service characteristics may, in turn be characterized by the utilization of different underlying technical means to serve said service (e.g. protocol stacks, procedures). Exemplarily, while two services may offer the same quality of service, they may be based on technical means. As further shown in Fig. 1 the method 10 also comprises supporting 12 a second telecommunication system. The second telecommunication system is or corresponds to a different generation of telecommunication systems than the first telecommunication system. The first telecommunication system is configured to provide access to at least one feature of the second telecommunication system using at least one network slice. For example, the first telecommunication system is a 5th generation system (5GS) according to the specifications of the 3rd Generation Partnership Project, 3GPP, and the second telecommunication system is a 6th or higher generation system (6GS) according to the specifications of the 3GPP. In further examples the situation may be vice-versa and the first telecommunication system may be of a lower generation than the second telecommunication system.

For example, a 5G system offers 6G via slicing. The method 10 is based on a telecommunication network supporting network slicing (the above first telecommunication system). On top of how a slice is defined in that current system, at least one slice is characterized by new features that are currently not possible, such as an enhanced protocol stack for the control plane, an enhanced protocol stack for the user plane, a modular non-access stratum, NAS, enhanced security mechanisms and/or selective user plane encryption. One or more components of the telecommunication network (UE, (R)AN, CN) are configured to associate one or more of the new features to one or more slices such that such new features can then be requested (e.g. UE requests it), assigned (e.g. network tells UE to use it), provided (e.g. provide services) and/or required (e.g. slice can only be used if feature X is supported by UE). In this way, the old features (those of the first telecommunication system) can still be used while the new features can be used where available and supported.

In the context of 3GPP (3rd Generation Partnership Project), the concepts of "release" and "generation" refer to distinct aspects of standardization and technology evolution in mobile communications. A "generation" represents a broad classification of mobile communication technology, such as 2G, 3G, 4G, or 5G, each marking a significant leap in capabilities and use cases. Generations are often associated with public awareness and branding, emphasizing transformative advancements like the introduction of mobile broadband in 3G, high-speed internet in 4G LTE, or ultra-low latency and massive connectivity in 5G. These generations define the overarching technological eras but do not specify the finer technical details that underpin them.

Conversely, a "release" refers to a specific set of detailed technical specifications developed by 3GPP to standardize the features, protocols, and capabilities within and across generations. Releases are sequentially numbered (e.g., Release 15, Release 16) and published periodically as part of 3GPP's ongoing work. Each release includes a collection of updates, enhancements, and new features that advance existing technologies and introduce new ones. For example, Release 15 marked the foundation for 5G, while Release 16 built upon it with enhancements for ultra-reliable low-latency communications (URLLC) and support for industrial loT (Internet of Things). Releases often cater to multiple generations simultaneously, as seen in the case of earlier releases that supported both 4G LTE and the initial rollout of 5G.

Generations are high-level categorizations focused on broad technological evolution and public milestones, while releases provide the incremental technical frameworks needed to implement and improve these technologies. For instance, 5G encompasses multiple releases (starting from Release 15), with each release introducing features that enhance its performance, expand its capabilities, or cater to emerging use cases. This layered approach allows 3GPP to maintain a forward-looking yet iterative development process, ensuring compatibility and innovation across generations.

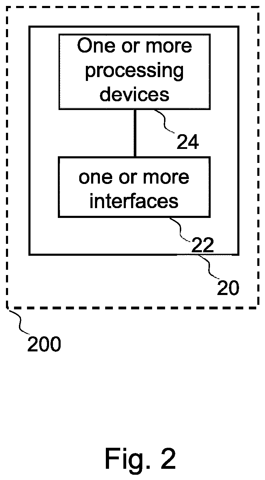

Fig. 2 illustrates a block diagram of an example of an apparatus 20 for providing services of multiple generations of mobile telecommunication systems. The apparatus 20 comprises one or more interfaces 22, which are configured to communicate in the telecommunication system and which are coupled to one or more processing devices 24. The one or more processing devices 24 are configured to perform one of the methods 10 as described herein. For example, the apparatus 20 may be comprised in a network node 200, e.g. a UE, a (R)AN node or a CN node of the telecommunication system. Hence, Fig. 2 also illustrates an example of a network node 200 comprising an example of the apparatus 20. Another example is a telecommunication system comprising an example of the apparatus 20.

As illustrated in Fig. 2, the respective one or more processing devices 24 are coupled to the one or more interfaces 22. The one or more interfaces 22 may correspond and/or be associated to one or more inputs and/or outputs for receiving and/or transmitting information, which may be in digital (bit) values according to a specified code or protocol, within a module, between modules or between modules of different entities. For example, an interface 22 may comprise interface circuitry configured to receive and/or transmit information. In examples an interface 22 may correspond to any means for obtaining, receiving, transmitting or providing analog or digital signals or information, e.g., any connector, contact, pin, register, input port, output port, conductor, lane, logical endpoint, especially based on internet protocol, IP, especially exposing an IP port and/or an API (Application Programming Interface); etc., as well as any abstraction thereof, especially based on virtualization, containerization, service abstraction, proxying, load-balancing, network address translation (NAT), cloud computing and/or serverless computing; which allows providing or obtaining a signal or information. An interface 22 may be configured to communicate (transmit, receive, or both) in a wireless or wireline manner and it may be configured to communicate, i.e., transmit and/or receive signals, information with further internal or external components. The one or more interfaces 22 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. Moreover, the one or more interfaces may be APIs in some examples. Moreover, the one or more interfaces may be logical transmission channels within a processing device or between processing devices, especially a signaling channel.

The one or more processing devices 24 may be implemented using one or more processing units, one or more circuitries, any means for processing, such as a processor, a computer or a programmable hardware component being operable with accordingly adapted software. In other words, the described function of the one or more processing devices 24 may as well be implemented in software, which is then executed on one or more programmable hardware components. Such hardware components may comprise a general-purpose processor, a Digital Signal Processor (DSP), a micro-controller, etc. and/or an abstraction thereof.

In examples a network entity or node may be any network node in a Radio Access Network (RAN), a Core Network (CN), or any node of any telecommunications system. For example, a network entity may generate cells of a cellular system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device, e.g. a base station or access point. Such a radio signal may comply with radio signals as, for example, standardized by 3GPP or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, plane, etc.

The telecommunication system 300 may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. In general, the UE may be a communication device or network node that is capable of communicating wirelessly. In particular, however, the communication device may be a mobile communication device, e.g., a communication device that may be suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a computer, a smartwatch, a laptop computer, a tablet computer, etc. The communication device may be in a vehicle, a car, a bus, a truck, a construction and/or agricultural machinery, a train, an airplane, a boat, a ship, a cruise ship, an Internet of Things (loT) device, a logistics application, etc.

In general, the (mobile) telecommunication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE, 4G), an LTE-Advanced (LTE-A), High Speed Packet Access (HSPA), a Universal Mobile Tele-communication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc. Further network entities or nodes are those comprised in a core network of the mobile communication system 300, as will be outlined in more details subsequently.

On the road towards 6G, an evolution of the slicing framework is used in examples that was created for 5G so that a 6G deployment can be slice-based. While many improvements are proposed for 6G, a key aspect that will determine what feature(s) and/or architecture(s) will be used for 6G is the aspect of migration and co-existence. This is also considered by ITU-T's IMT-2030 (International Telecommunication Union - Telecommunication Standardization Sector, International Mobile Telecommunications). While it is nice to devise a 6G vision, it is important, if not even more important, to provide a path between current deployments and the 6G vision such that the realizability of deployments can be improved. Mainly:
- No need to redo the system (e.g. avoid a requirement for a cost-intensive redeployment of network elements to provide basic service),
- Reuse existing 5G mechanisms where possible,
- Apply changes/evolution where it brings a benefit and when it is possible (i.e. flexibility and modularity),
- Keep 5G as-is where no changes are needed, and
- Provide a path to convergence between 5G and 6G such that improvements for 6G can also benefit 5G.

It is a finding that enhancements to the 5G system can be used such that 6G can be deployed based on slicing and 5G can be used as basis for 6G.

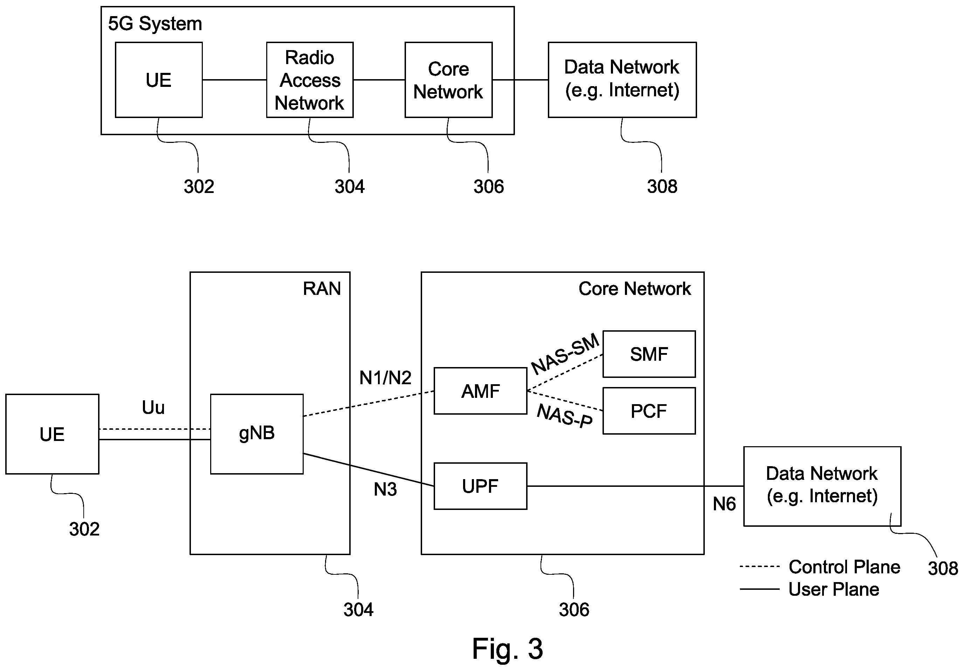

In the following the general architecture of mobile networks will be described. The current paradigm divides the mobile network in two main parts: Access Network (AN) and Core Network (CN). Fig. 3 depicts a conventional 5G system at the top and data transmission between UE and a data network at the bottom. Fig. 3 shows a UE 302 that connects via RAN 304 and CN 306 to a data network 308, e.g. the internet. The objective is to provide the UE with connectivity towards the data network (DN) 308. Going in more detail, the UE302 communicates with the RAN 304 via a radio interface, which is used for conveying both signaling information and data traffic. Even if there is a logical separation (logical channels), for obvious reasons both types of data end up being transmitted over the same physical medium.

Between the RAN and the Core Network (CN) 306, signaling information and user data are separated in different interfaces: N1/N2 and N3 in the 5G case, the former running on a

SCTP/NG-AP/NAS protocol stack (Stream Control Transmission Protocol / Next Generation Application Protocol / None Access Stratum)) and the latter running on a UDP/GTPU-U protocol stack (User Datagram Protocol / GPRS (General Packet Radio Service) Tunneling Protocol - User Plane). Fig. 3 shows at the bottom the UE 302 communicating with a gNB of the RAN 304 using control plane (dotted line) and user plane (solid line) data. The gNB of the RAN 304 connect via the N3 interface to the user plane function (UPF) on the CN 306 and then via N6 to the DN 308. In the control plane the gNB connect via N1/N2 to the AMF (Access and Mobility Management Function) in the CN 306. The AMF connects vis NAS-SM (NAS-Session management) to the session management function (SMF) and via NAS-P (Policy) to the policy control function (PCF).

In order to establish a data connection enabling a UE 302 to communicate with a DN 308, a PDU (Packet Data Unit) session es required. A PDU session is a logical data transport channel terminated at the CN 306 that provides connectivity to a DN 308. The termination point of a given PDU session (UPF in Fig. 3 and how it works in 5G) is termed PDU Session Anchor (PSA).

Control plane (CP) signaling between the UE and the CN (or the (R)AN) is based on the NAS protocol. While the NAS protocol is typically defined as "terminated at the AMF", there are some nuances to this statement.

The NAS protocol for 4G/EPC (Evolved Packet Core, TS 24.301, https://www.3qpp.orq/ftp/Specs/archive/24 series/24.301/24301-f80.zip) was reused and extended. NAS exchanges standard L3 (Layer 3) messages (TS 24.007, https://www.3qpp.orq/ftp/Specs/archive/24 series/24.007/24007-i10.zip).

5G-NAS (TS 24.501, https://www.3gpp.org/ftp/Specs/archive/24 series/24.501/24501-f70.zip) is an evolution of 4G-NAS and also defines the information element coding in the specification. The path chosen for 5G was to terminate NAS security at a common point and disaggregate the MME (Mobility Management Entity) functionality.
- AMF terminates NAS security for all NAS of a UE and processes Mobility Management (MM),
- For other functions, it forwards NAS payloads over SBI (Service-Based Interface) to other NFs (Network Functions):
   o SMF for Session Management (SM),
   o SMSF for SMS (Short Message Service (Function)),
   o PCF (Policy Control Function) for policy, and
   ∘ GMLC for location (Gateway Mobile Location Centre).

SBI refers to Service-Based Interface. It uses the Service Based Architecture (SBA) 5GC (5G Core) Control Plane (CP) Architecture. SBIs use a newly-defined protocol stack. Instead of GTP-C (GTP-Control Plane), it is now based on HTTP/2 (Hypertext Transfer Protocol, more binary & more performant than HTTP).

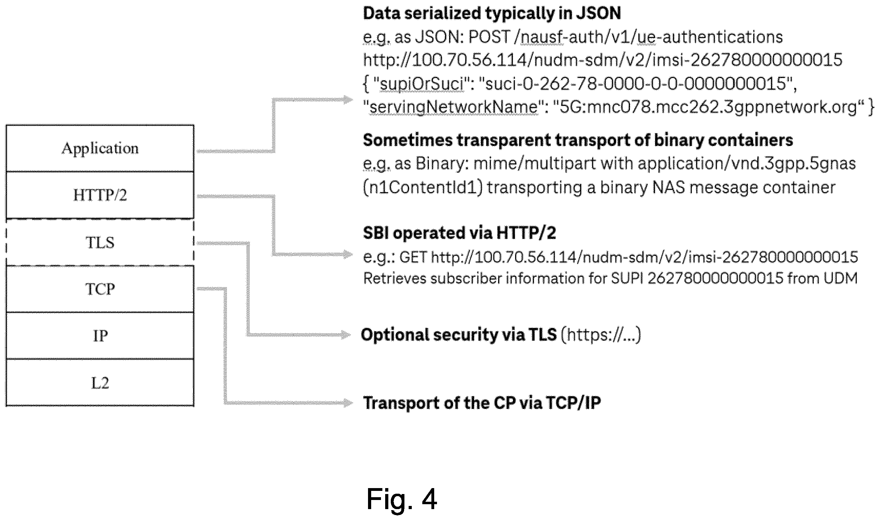

NAS information is transported in SBI messages by including the NAS binary container as MIME multipart together with a JSON (JavaScript Object Notation) body. Fig. 4 shows a service-based interface protocol stack in a 5GC system. Fig. 4 shows from bottom to top the IP-layer (Internet Protocol) above layer 2 (L2). Transmission Control Protocol (TCP) is used on top of IP to transport the control plane (CP) data via TCP (Transmission Control Protocol). Transport Layer Security (TLS) is an optional security layer. HTTP/2 is used on top to operate the SBI. At the top of the protocol stack, the application layer uses serialized data typically in JSON and sometimes transparent transport of binary containers takes place. Fig. 4 further provides examples for the respective protocol layer operations.

In the following further details on slicing will be provided. Network slicing is a defining feature of the 5GS. It allows a network to be segmented, such that certain NFs can be used to deliver specific services. As defined in TS 23.501 (the following is an excerpt from TS 23.501):

### 5.15 Network slicing

### 5.15.1 General

A Network Slice instance is defined within a PLMN or within an SNPN and shall include:
- the Core Network Control Plane and User Plane Network Functions, as described in clause 4.2,
and, in the serving PLMN, at least one of the following:
- the NG-RAN described in TS 38.300 [27];
- the N3IWF or TNGF functions to the non-3GPP Access Network described in clause 4.2.8.2 or the TWIF functions to the trusted WLAN in the case of support of N5CW devices described in clause 4.2.8.5;
- the W-AGF function to the Wireline Access Network described in clause 4.2.8.4.

The 5G System deployed in a PLMN shall always support the procedures, information and configurations specified to support Network Slice instance selection in the present document, TS 23.502 [3] and TS 23.503 [45].

NOTE 1: Management of network slices are described in TS 28.530 [175], the procedures for provisioning of networks and network slices are described in TS 28.531 [176] and TS 28.541 [149] describes the resource model for managing the resources.

Network slicing support for roaming is described in clause 5.15.6.

Network slices may differ for supported features and network functions optimisations, in which case such Network Slices may have e.g. different S-NSSAIs with different Slice/Service Types (see clause 5.15.2.1). The operator can deploy multiple Network Slices delivering exactly the same features but for different groups of UEs, e.g. as they deliver a different committed service and/or because they are dedicated to a customer, in which case such Network Slices may have e.g. different S-NSSAIs with the same Slice/Service Type but different Slice Differentiators (see clause 5.15.2.1).

The network may serve a single UE with one or more Network Slice instances simultaneously via a 5G-AN regardless of the access type(s) over which the UE is registered (i.e. 3GPP Access and/or N3GPP Access). The AMF instance serving the UE logically belongs to each of the Network Slice instances serving the UE, i.e. this AMF instance is common to the Network Slice instances serving a UE.

NOTE 2: Number of simultaneous connection of Network Slice instances per UE is limited by the number of S-NSSAIs in the Requested/Allowed NSSAI as described in clause 5.15.2.1.

NOTE 3: In this Release of the specification it is assumed that in any (home or visited) PLMN it is always possible to select an AMF that can serve any combination of S-NSSAIs that will be provided as an Allowed NSSAI.

The selection of the set of Network Slice instances for a UE is triggered by the first contacted AMF in a Registration procedure normally by interacting with the NSSF, and can lead to a change of AMF. This is further described in clause 5.15.5.

A PDU Session belongs to one and only one specific Network Slice instance per PLMN. Different Network Slice instances do not share a PDU Session, though different Network Slice instances may have slice-specific PDU Sessions using the same DNN.

During the Handover procedure the source AMF selects a target AMF by interacting with the NRF as specified in clause 6.3.5.

Network Slice-Specific Authentication and Authorization (NSSAA) enables Network Slice specific authentication as described in clause 5.15.10.

Network Slice Admission Control (NSAC) controls the number of registered UEs per network slice, the number of UEs with at least one PDU Session/PDN Connection per network slice in the case of EPC interworking and the number of PDU Sessions per network slice as described in clause 5.15.11.

Support of subscription-based restrictions to simultaneous registration of network slices uses Network Slice Simultaneous Registration Group (NSSRG) information to enable control of which Network Slices that can be registered simultaneously by a UE as described in clause 5.15.12.

Support of data rate limitation per Network Slice for a UE enables enforcement of Maximum Bit Rate per Network Slice for a UE as described in clause 5.15.13.

The selection of N3IWF/TNGF supporting a set of slice(s) is described in clause 6.3.6 and clause 6.3.12 respectively.

The support of Network Slice usage control is described in clause 5.15.15.

Support of Optimized handling of temporarily available network slices is described in clause 5.15.16. It also covers aspects related to graceful release of network slices connectivity during slice decommissioning.

The Partial Network Slice support in a Registration Area is described in clause 5.15.17.

Support for Network Slices with Network Slice Area of Service not matching deployed Tracking Areas is described in clause 5.15.18.

Support of Network Slice Replacement is described in clause 5.15.19.

TS 38.300 (RAN overview specification, 3GPP TS 38.300 V18.4.0 (2024-12), Technical Specification, 3rd Generation Partnership Project; Technical Specification Group Radio Access Network; NR; NR and NG-RAN Overall Description; Stage 2 (Release 18)) offers a shorter description. What slicing offers is a means to provide "tenants" within an MNO, such that different PDU sessions/users can be served differently. As defined in TS 38.300 (the following is an excerpt from TS 38.300):

### 16.3 Network Slicing

### 16.3.1 General Principles and Requirements

In this clause, the general principles and requirements related to the realization of network slicing in the NG-RAN for NR connected to 5GC and for E-UTRA connected to 5GC are given.

A network slice always consists of a RAN part and a CN part. The support of network slicing relies on the principle that traffic for different slices is handled by different PDU sessions. Network can realise the different network slices by scheduling and also by providing different L1/L2 configurations.

Each network slice is uniquely identified by a S-NSSAI, as defined in TS 23.501 [3]. NSSAI (Network Slice Selection Assistance Information) includes one or a list of S-NSSAIs (Single NSSAI) where a S-NSSAI is a combination of:
- mandatory SST (Slice/Service Type) field, which identifies the slice type and consists of 8 bits (with range is 0-255);
- optional SD (Slice Differentiator) field, which differentiates among Slices with same SST field and consist of 24 bits.

The list includes at most 8 S-NSSAI(s).

The UE provides NSSAI (Network Slice Selection Assistance Information) for network slice selection in *RRCSetupComplete,* if it has been provided by NAS (see clause 9.2.1.3). While the network can support large number of slices (hundreds), the UE need not support more than 8 slices simultaneously. A BL UE or a NB-IoT UE supports a maximum of 8 slices simultaneously.

Network Slicing is a concept to allow differentiated treatment depending on each customer requirements. With slicing, it is possible for Mobile4 Network Operators (MNO) to consider customers as belonging to different tenant types with each having different service requirements that govern in terms of what slice types each tenant is eligible to use based on Service Level Agreement (SLA) and subscriptions.

In order for a UE to register into a specific slice (or slices), slices are identified by a Single Network Slice Selection Assistance information (S-NSSAI), a "slice identifier" for short. When (re-)registering into the network, the UE requests a given NSSAI (a set of S-NSSAls, at most eight when registering) and it is given an allowed NSSAI by the network. As defined in TS 23.501 (the following is another excerpt from TS 23.501):

### 5.15.2 Identification and selection of a Network Slice: the S-NSSAI and the NSSAI

### 5.15.2.1 General

An S-NSSAI identifies a Network Slice.

An S-NSSAI is comprised of:
- A Slice/Service type (SST), which refers to the expected Network Slice behaviour in terms of features and services;
- A Slice Differentiator (SD), which is optional information that complements the Slice/Service type(s) to differentiate amongst multiple Network Slices of the same Slice/Service type.

An S-NSSAI can have standard values (i.e. such S-NSSAI is only comprised of an SST with a standardised SST value, see clause 5.15.2.2, and no SD) or non-standard values (i.e. such S-NSSAI is comprised of either both an SST and an SD or only an SST without a standardised SST value and no SD). An S-NSSAI with a non-standard value identifies a single Network Slice within the PLMN with which it is associated. An S-NSSAI with a non-standard value shall not be used by the UE in access stratum procedures in any PLMN other than the one to which the S-NSSAI is associated.

The S-NSSAIs in the NSSP of the URSP rules (see clause 6.6.2 of TS 23.503 [45]) and in the Subscribed S-NSSAIs (see clause 5.15.3) contain only HPLMN S-NSSAI values.

The S-NSSAIs in the Configured NSSAI, the Allowed NSSAI (see clause 5.15.4.1), the Requested NSSAI (see clause 5.15.5.2.1), the Rejected S-NSSAIs contain only values from the Serving PLMN. The Serving PLMN can be the HPLMN or a VPLMN.

The S-NSSAI(s) in the PDU Session Establishment contain one Serving PLMN S-NSSAI value and in addition may contain a corresponding HPLMN S-NSSAI value to which this first value is mapped (see clause 5.15.5.3). Further information for slice replacement is described in clause 5.15.19.

The optional mapping of Serving PLMN S-NSSAIs to HPLMN S-NSSAIs contains Serving PLMN S-NSSAI values and corresponding mapped HPLMN S-NSSAI values.

The NSSAI is a collection of S-NSSAIs. An NSSAI may be a Configured NSSAI, a Requested NSSAI, Allowed NSSAI or a Partially Allowed NSSAI. There can be at most eight S-NSSAIs in Allowed NSSAI and Requested NSSAI sent in signalling messages between the UE and the Network. There can be at most seven S-NSSAIs in the Partially Allowed NSSAI and at most seven S-NSSAIs rejected partially in the RA, and the sum of S-NSSAIs in the Allowed NSSAI, and the Partially Allowed NSSAI shall be at most eight. The Requested NSSAI signalled by the UE to the network allows the network to select the Serving AMF, Network Slice(s) and Network Slice instance(s) for this UE, as specified in clause 5.15.5.

NOTE 1: There can be at most a maximum of seven S-NSSAIs in the Partially Allowed NSSAI since there will always be an Allowed NSSAI allocated.

Based on the operator's operational or deployment needs, a Network Slice instance can be associated with one or more S-NSSAIs, and an S-NSSAI can be associated with one or more Network Slice instances. Multiple Network Slice instances associated with the same S-NSSAI may be deployed in the same or in different Tracking Areas. When multiple Network Slice instances associated with the same S-NSSAI are deployed in the same Tracking Areas, the AMF instance serving the UE may logically belong to (i.e. be common to) more than one Network Slice instance associated with this S-NSSAI.

In a PLMN, when an S-NSSAI is associated with more than one Network Slice instance, one of these Network Slice instances, as a result of the Network Slice instance selection procedure defined in clause 5.15.5, serves a UE that is allowed to use this S-NSSAI. For any S-NSSAI, the network may at any one time serve the UE with only one Network Slice instance associated with this S-NSSAI until cases occur where e.g. this Network Slice instance is no longer valid in a given Registration Area, or a change in UE's Allowed NSSAI occurs, etc. In such cases, procedures mentioned in clause 5.15.5.2.2 or clause 5.15.5.2.3 apply.

Based on the Requested NSSAI (if any) and the Subscription Information, the 5GC is responsible for selection of a Network Slice instance(s) to serve a UE including the 5GC Control Plane and User Plane Network Functions corresponding to this Network Slice instance(s). The Subscription Information may contain restrictions to the simultaneous registration of network slices. This is provided to the serving AMF as part of the UE subscription, in the form of Network Slice Simultaneous Registration Group (NSSRG) information (see clause 5.15.12).

The (R)AN may use Requested NSSAI in access stratum signalling to handle the UE Control Plane connection before the 5GC informs the (R)AN of the Allowed NSSAI. The Requested NSSAI is used by the RAN for AMF selection, as described in clause 6.3.5. The UE shall not include the Requested NSSAI in the RRC Resume when the UE asks to resume the RRC connection and is CM-CONNECTED with RRC_INACTIVE state.

When a UE is successfully registered over an Access Type, the CN informs the (R)AN by providing the Allowed NSSAI for the corresponding Access Type.

NOTE 2: The details of how the RAN uses NSSAI information are described in TS 38.300 [27].

A S-NSSAI is composed of two parts: a Slice/Service Type, which defines the type of the slice and a Slice Differentiator, which identifies a specific slice within a given type. Some SST values are standardized, and an operator can define its own slice identifier values. As defined in TS 23.501 (the following is an excerpt from TS 23.501):

### 5.15.2.2 Standardised SST values

Standardized SST values provide a way for establishing global interoperability for slicing so that PLMNs can support the roaming use case more efficiently for the most commonly used Slice/Service Types.

The SSTs which are standardised are in the following Table 5.15.2.2-1.

**Table 5.15.2.2-1: Standardised SST values**

| **Slice/Service type** | **SS T val ue** | **Characteristics** |
|---|---|---|
| eMBB | 1 | Slice suitable for the handling of 5G enhanced Mobile Broadband. |
| URLLC | 2 | Slice suitable for the handling of ultra- reliable low latency communications. |
| MIoT | 3 | Slice suitable for the handling of massive IoT. |
| V2X | 4 | Slice suitable for the handling of V2X services. |
| HMTC | 5 | Slice suitable for the handling of High-Performance Machine-Type Communications. |
| HDLLC | 6 | Slice suitable for the handling of High Data rate and Low Latency Communications. |

| | | |
|---|---|---|
| NOTE 1: The support of all standardised SST values is not required in a PLMN. Services indicated in this table for each SST value can also be supported by means of other SSTs. NOTE 2: A mapping of GSMA defined Network Slice Types (NEST) to standard SST values is defined in GSMA NG.116 [137]. | | |

Equally important, the subscription information contains the information regarding what slices a given subscriber is allowed to use (e.g. eMBB, a premium slice, V2X (Vehicle-to-Anything), etc.). As defined in TS 23.501 (the following is an excerpt from TS 23.501):

### 5.15.3 Subscription aspects

The Subscription Information shall contain one or more S-NSSAIs i.e. Subscribed S-NSSAIs. The subscription information shall include at least one default S-NSSAI. The UDM sends at the most 16 Subscribed S-NSSAIs to AMF, i.e. the number that can fit in a Configured NSSAI. The subscription information the UDM sends to the AMF shall include at least one default S-NSSAI.

If an S-NSSAI is marked as default, then the network is expected to serve the UE with a related applicable Network Slice instance when the UE does not send any permitted S-NSSAI to the network in a Registration Request message as part of the Requested NSSAI.

The Subscription Information for each S-NSSAI may contain:
- a Subscribed DNN list and one default DNN; and
- the indication whether the S-NSSAI is marked as default Subscribed S-NSSAI; and
- the indication whether the S-NSSAI is subject to Network Slice-Specific Authentication and Authorization; and
- Network Slice Simultaneous Usage Group (NSSRG) information (see clause 5.15.12).

The network verifies the Requested NSSAI the UE provides in the Registration Request against the Subscription Information. For the S-NSSAIs subject to Network Slice-Specific Authentication and Authorization the clause 5.15.10 applies.

NOTE 1: It is recommended that at least one of the Subscribed S-NSSAIs marked as default S-NSSAI is not subject to Network Slice-specific Authentication and Authorization, in order to ensure access to services even when Network Slice-specific Authentication and Authorization fails.

NOTE 2: It is recommended to minimize the number of Subscribed S-NSSAIs in subscriptions for NB-IoT or NR RedCap capable UEs to minimize overhead for signalling a large number of S-NSSAIs in Requested NSSAI in RRC and NAS via NB-IoT or NR RedCap.

In roaming case, the UDM shall provide to the VPLMN only the S-NSSAIs from the Subscribed S-NSSAIs the HPLMN allows for the UE in the VPLMN. If the UE is subject to restrictions of simultaneous registration of network slices (i.e. if the Subscription Information for the S-NSSAIs contains NSSRG information), the UDM provides to the VPLMN a subscribed S-NSSAIs and, if applicable, NSSRG information, as described in clause 5.15.12.

NOTE 3: Network slice instances supporting an S-NSSAI subject to Network Slice-Specific Authentication and Authorization need to be deployed with AMFs supporting Network Slice-Specific Authentication and Authorization, otherwise S-NSSAIs requiring Network Slice-Specific Authentication and Authorization would be incorrectly allowed without execution of Network Slice-Specific Authentication and Authorization.

NOTE 4: Network slice instances supporting an S-NSSAI subject to Network Slice Admission Control (NSAC) for number of registered UE per network slice need to be deployed with AMFs supporting NSAC, otherwise S-NSSAIs requiring NSAC would be incorrectly allowed without execution of NSAC.

When the UDM updates the Subscribed S-NSSAI(s) to the serving AMF, based on configuration in this AMF, the AMF itself or the NSSF determines the mapping of the Configured NSSAI for the Serving PLMN and/or Allowed NSSAI to the Subscribed S-NSSAI(s). The serving AMF then updates the UE with the above information as described in clause 5.15.4.

In order for the UE to know to what slice(s) it should register, the UE is provisioned with Network Slice configuration information, which can be stored in the ME (Mobile Equipment) or the USIM (Universal Subscriber Identity Module, both within the UE). This information can be updated by the network via the UE Parameter Update procedure (CP message from the UDM (Unified Data Management) to the UE via the AMF). As defined in TS 23.501 (the following is an excerpt from TS 23.501):

### 5.15.4 UE NSSAI configuration and NSSAI storage aspects

### 5.15.4.1 General

### 5.15.4.1.1 UE Network Slice configuration

The Network Slice configuration information contains one or more Configured NSSAI(s). A Configured NSSAI may either be configured by a Serving PLMN and apply to the Serving PLMN, or may be a Default Configured NSSAI configured by the HPLMN and that applies to any PLMNs for which no specific Configured NSSAI has been provided to the UE. There is at most one Configured NSSAI per PLMN.

NOTE 1: The value(s) used in the Default Configured NSSAI are expected to be commonly decided by all roaming partners, e.g. by the use of values standardized by 3GPP or other bodies.

The Default Configured NSSAI, if it is configured in the UE, is used by the UE in a Serving PLMN only if the UE has no Configured NSSAI for the Serving PLMN.

The Configured NSSAI of a PLMN may include S-NSSAIs that have standard values or PLMN-specific values.

The Configured NSSAI for the Serving PLMN includes the S-NSSAI values which can be used in the Serving PLMN and may be associated with mapping of each S-NSSAI of the Configured NSSAI to one or more corresponding HPLMN S-NSSAI values. In the non-roaming case, the network shall not provide any mapped S-NSSAI to the UE with the Configured NSSAI. In the roaming case, the AMF shall provide to the UE the mapping of each S-NSSAI of the Configured NSSAI for the Serving PLMN to the corresponding S-NSSAI values of the HPLMN when providing NSSAI information, as described in TS 24.501 [47].

A UE subscription may contain Network Slice Simultaneous Registration Group (NSSRG) information. If so, the UE configuration is performed as described in clause 5.15.12.2.

The UE may be pre-configured with the Default Configured NSSAI. The UE may be provisioned/updated with the Default Configured NSSAI, determined by the UDM in the HPLMN, using the UE Parameters Update via UDM Control Plane procedure defined in clause 4.20 of TS 23.502 [3]. Each S-NSSAI in the Default Configured NSSAI may have a corresponding S-NSSAI as part of the Subscribed S-NSSAI(s). Consequently, if the Subscribed S-NSSAI(s) which are also present in the Default Configured NSSAI are updated the UDM should update the Default Configured NSSAI in the UE.

From RAN perspective, the most important consideration slicing requires is that since a UE is served by a single AMF, the AMF needs to support all of the slices requested by (and ultimately allowed to) the UE. As included in TS 38.300 (the following is an excerpt from TS 38.300):
The following key principles apply for support of Network Slicing in NG-RAN: [...]

### RAN selection of CN entity

- For initial attach, the UE may provide NSSAI to support the selection of an AMF. If available, NG-RAN uses this information for routing the initial NAS to an AMF. If the NG-RAN is unable to select an AMF using this information or the UE does not provide any such information the NG-RAN sends the NAS signalling to one of the default AMFs.
- For subsequent accesses, the UE provides a Temp ID, which is assigned to the UE by the 5GC, to enable the NG-RAN to route the NAS message to the appropriate AMF as long as the Temp ID is valid (NG-RAN is aware of and can reach the AMF which is associated with the Temp ID). Otherwise, the methods for initial attach applies. [...]

### 16.3.2 AMF and NW Slice Selection

### 16.3.2.1 CN-RAN interaction and internal RAN aspects

NG-RAN selects AMF based on a Temp ID or NSSAI provided by the UE over RRC as specified in TS 38.410 [16]. The mechanisms used in the RRC protocol are described in the next clause.

**Table 16.3.2.1-1 AMF selection based on Temp ID and NSSAI**

| **Temp ID** | **NSSAI** | **AMF Selection by NG-RAN** |
|---|---|---|
| not available or invalid | not available | One of the default AMFs is selected (NOTE) |
| not available or invalid | present | Selects AMF which supports UE requested slices |
| valid | not available, or present | Selects AMF per CN identity information in Temp ID |
| NOTE: The set of default AMFs is configured in the NG-RAN nodes via OAM. | | |

In the following the path to 6G will be described. Several enhancements have been proposed for 6G. These enhancements have the potential to provide a more flexible network capable of serving UEs in the best possible way.

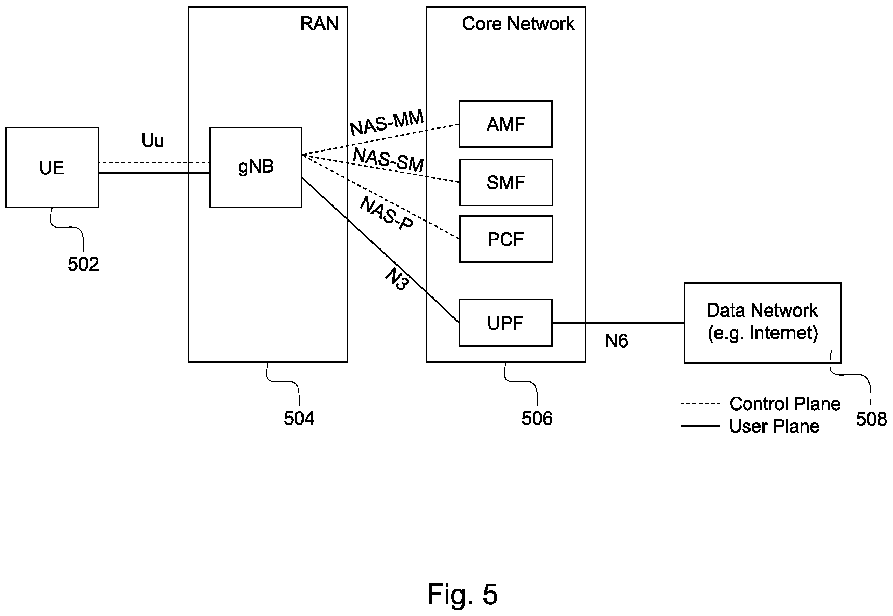

One of the optimizations that has the potential to be implemented in 6G is that of the disaggregation of the AMF. That is, to replace the AMF's function as a single point of termination for the NAS protocol and NAS security context, such that the UE is capable of directly communicating with CP elements. For that, a UE would need to establish multiple security contexts, among other issues. Fig. 5 illustrates a disaggregated NAS in an example. Fig. 5 shows a UE 502, which communicates CP and UP data using RAN 504, CN 506, and DN 508, similar to Fig. 3 at the bottom. As shown in Fig. 5 in the CN 506 the NFs are separated or disaggregated using respective interface NAS-MM (Mobility Management), NAS-SM (Session Management) and NAS-P (Policy).

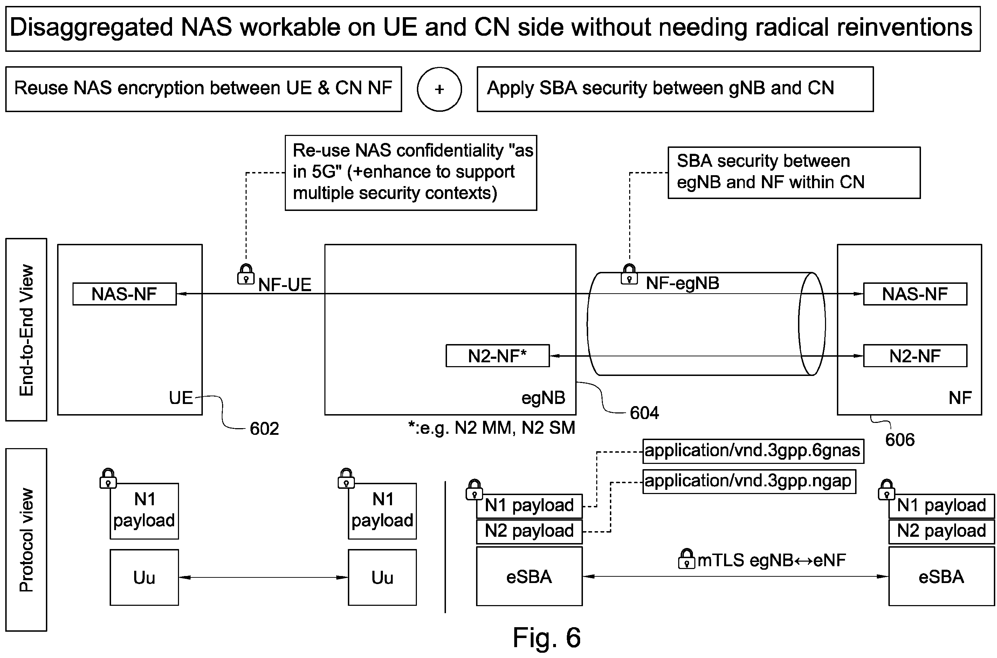

The most important aspect of NAS disaggregation would be a real separation between Access & Mobility (AM) and Session Management (SM). In current mobile networks, AM and SM are intertwined by virtue of the AMF being the NAS termination point. A switch to a disaggregated NAS on network side would enable more flexible deployments in 6G, as shown in available references and state of the art. Fig. 6 depicts a protocol overview for disaggregated NAS (modular NAS) in an example. The concept shown in Fig. 6 is a disaggregated NAS workable on UE and CN side without needing radical reinventions. It reuses NAS encryption between the UE and CN NFs and applies SBA security between gNB (RAN) and CN. As shown at the top UE 602 communicates NAS-NF data via the RAN 604 (egNB) using NAS confidentiality as in 5G, potentially enhanced with support of multiple security contexts. SBA security is used between egNB 604 and the CN-NF 606, likewise another protocol context is used for an N2-NF (e.g. N2 MM or N2 SM) between egNB 604 and the CN N2-NF. Fig. 6 illustrates the protocol view at the bottom. On the Uu interface (Air interface) N1 payload encryption is used. On an enhanced SBA interface (eSBA) N1- and N2 payload in encrypted using mTLS (mutual Transport Layer Security) between the egNB and the enhanced NF in the CN.

Another proposed enhancement is to extend Service Based Architecture to cover the whole of the CP, which (especially) includes the N2 interface and N4 interfaces. This can be easily achieved by using HTTP to transport ASN.1-based (Abstract Syntax Notation 1) protocols.

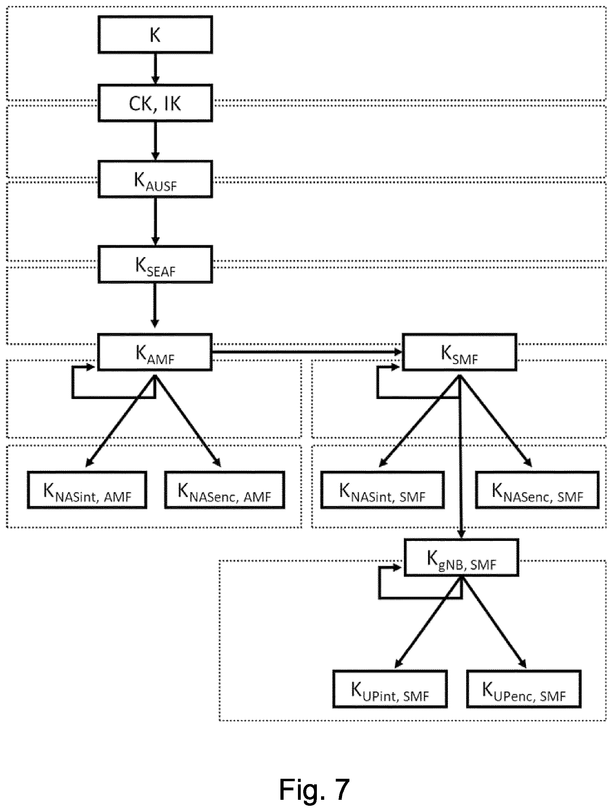

Additionally, multiple security contexts can be used for modular NAS and different PDU sessions, which allow for more secure communication (albeit at the cost of additional computational complexity, as security trade-off typically go). Fig. 7 shows horizontal key derivation in an example.

Fig. 7 provides an overview of a key derivation process, starting from a root key K (shown at the top) generated during authentication and progressing through intermediate keys to the session-specific keys used for encrypting and protecting data and signaling. The hierarchy ensures that the security contexts are effectively managed across different layers of communication in the 5G system.

At the top of the hierarchy is the root key, denoted as K, which may be generated during an authentication process. This key may be shared between the UE and the network and may form the basis for all subsequent key derivations on the network as well as UE side. From K, a Cipher Key (CK) and an Integrity Key (IK) may be derived on the network and UE side. These keys may be used to create an Anchor Key (K_{AUSF}) at the Authentication Server Function (AUSF) and UE, which marks the entry point into the 5G Core Network's security framework.

A Security Anchor Key (K_{SEAF}) may be derived from K_{AUSF} by a Security Anchor Function (SEAF) within the Serving Network and the by the UE. K_{SEAF} may then be used to generate the Access Management Key (K_{AMF}) within the AMF 132 and the UE. K_{AMF} may provide the security context for managing NAS signaling between the UE and the CN.

From K_{AMF}, additional keys may be derived to support specific security functions. As shown in Fig. 7 K_{SMF} may be derived from K_{AMF} to establish a security context for SMF. A gNodeB Key (K_{GNB}) may be generated from K_{SMF} at both ends for protecting Radio Resource Control (RRC) signaling and UP data on the air interface. Similarly, NAS signaling keys K_{NASint, AMF} and K_{NASenc,AMF} may be derived from K_{AMF} at both ends to ensure the integrity and confidentiality of NAS signaling messages between the UE and the AMF. Likewise, K_{gNB,SMF} may be further used to derive K_{UPint,SMF} and K_{UPenc,SMF} which may protect integrity and confidentiality of user data.

In order to efficiently implement secure CP between the UE and different NAS CP entities in the CN, the illustrated scheme introduces the generation of multiple sub-keys for the UE and each of the NAS CP entities, from which encryption and integrity protection keys can be derived.

For this, UE and CN entities may respectively be equipped with one or more processors, memory, and communication interfaces to perform the tasks required for deriving encryption and integrity protection keys, managing multiple NAS security contexts and/or UP flows, and establishing secure communication. The processors may be responsible for executing the necessary algorithms and protocols to derive the keys. They may handle cryptographic operations, including the key derivation processes and the initialization and maintenance of cryptographic state machines for each NAS security context or UP flow. The memory may store security-related information, including derived keys, cryptographic state machine parameters, and counters. This memory may also retain configuration data necessary for associating keys with specific contexts or flows. The communication interfaces may enable the UE to interact with the CN and the RAN. These interfaces may handle the exchange of signaling messages for setting up security contexts, managing keys, and maintaining synchronization between the UE and network entities such as the AMF, SMF, or UPF.

In the horizontal key derivation an example case illustrated in Fig. 7, it is considered to use K_{AMF} (key for AMF) to derive other NAS/UP keys. K_{AMF} is based on K_{SEAF}. K_{SMF} is derived based on K_{AMF}. In general, a CP/UP entity (e.g., AMF) in a telecommunication system may be configured to derive, based on a security anchor key (K_{SEAF}), a CP/UP entity-specific key (e.g., K_{AMF}) from the security anchor key and forward the derived CP/UP entity-specific key (e.g., K_{AMF}) to another CP/UP entity (e.g., SMF). The other CP/UP entity (e.g., SMF) may then derive, based on the forwarded CP/UP entity-specific key (e.g., K_{AMF}), another CP/UP entity-specific key (e.g., K_{SMF}). Here, the forwarded the CP/UP entity-specific key (e.g., K_{AMF}) acts as a security anchor key for the other CP/UP entity (e.g., SMF).

The essence of horizontal key derivation, as illustrated in Fig. 7, lies in a sequential derivation and forwarding of entity-specific keys between CP/UP entities in a telecommunication system. In this approach, a security anchor key such as K_{SEAF} is used by an initial CP entity, for example, the AMF, to derive its specific key K_{AMF}. This key serves not only as the foundation for securing NAS signaling within the AMF but also as a secondary security anchor key that can be forwarded to another CP or UP entity, such as the SMF.

The receiving entity, in this case the SMF, uses the forwarded K_{AMF} as its input security anchor and derives its own specific key, K_{SMF}. This process may continue hierarchically, with the derived K_{SMF} being further used to generate additional keys for encryption and integrity protection of NAS signaling (K_{NASint,SMF} and K_{NASenc,SMF}) or user plane flows (K_{UPint,SMF} and K_{UPenc,SMF}). By chaining key derivations in this manner, each derived key may be securely linked to the preceding one, providing a robust mechanism for establishing security contexts while limiting the scope of each key to its respective function. Further details can be found in EP24219718.4, which is incorporated per reference herein.

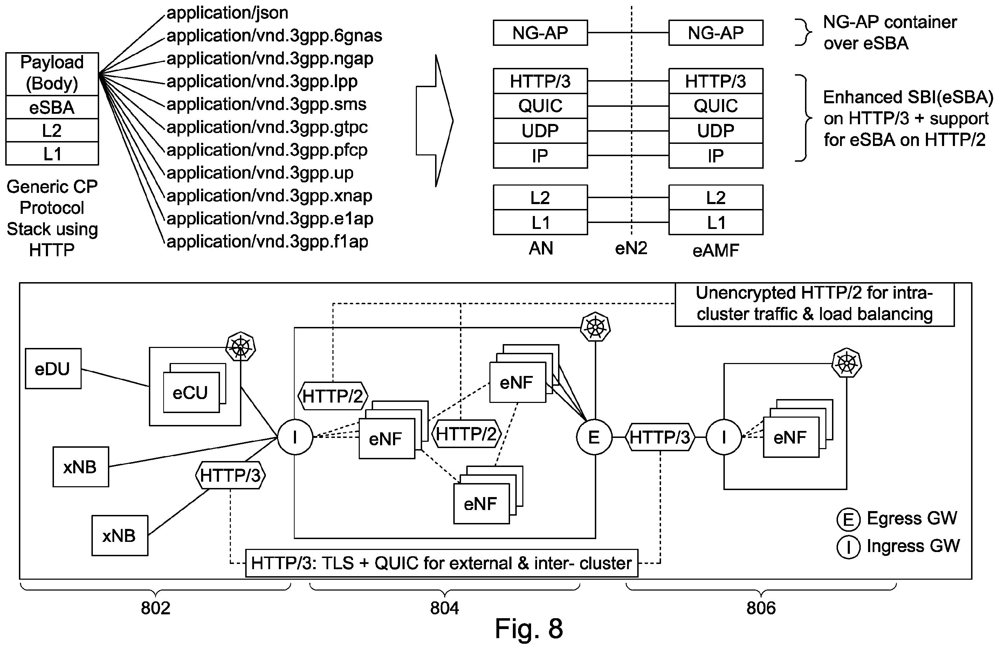

In order to enable a unified CP protocol stack, it is also proposed for 6G that SBI is used for all of the CP. Fig. 8 illustrates using HTTP to transport CP in 6G networks in an example at the top and a combination of HTTP/2 and HTTP/3 in an example at the bottom. At the top left Fig. 8 shows a generic CP protocol stack with payload, eSBA (enhanced SBA), L2 and L1 (layer 1). The CP messages are then communicated using the protocol stack shown on the top right of Fig. 8 between the AN and the eAMF in the CN using an enhanced N2 interface (eN2). The protocol stack uses NG-AP (Next Generation Application Protocol), HTTP/3, QUIC (Quick UDP Internet Connections, User Datagram Protocol (UDP)), UDP, IP, L2 and L1. NG-AP communicates a container over eSBA. The enhanced SBI (eSBA) uses HTTP/3 and supports eSBA on HTTP/2 (this alternative HTTP/2 protocol stack is not shown in Fig. 8). That way, there may be a mandatory support for HTTP/2 and HTTP/3 and IPv6 in the CP for 6G-capable NFs/RAN. Operators may have flexibility to deploy encryption/lpv6 where desired or needed and easy migration may be enabled. Information elements that are already specified may be reused. There might not be any need to re-do/re-specify many thousands of ASN.1 (Abstract Syntax Notation 1), PFCP (Packet Forwarding Control Protocol) and NAS elements. Protocol stacks may be harmonized and modernized. A number of telecommunication-specific protocols may be reduced. Specifics may be only used when need and other stacks may be updated. That way an evolution for security and trust framework can take place.

Fig. 8 shows at the bottom a combination of HTTP/2 and HTTP/3 in a network. In line with the above, it is possible to realize flexible encryption of the CP using a combination of HTTP/2 and HTTP/3. Fig. 8 shows a RAN 802 at the left, with an enhance distributed unit (eDU), an enhanced central unit (eCU) and multiple XNBs (different generation of Node Bs). Via an ingress node I the RAN nodes communicate with eNFs in the CN 804, which connects via egress node E, HTTP/3, and ingress node I to further eNFs 806.

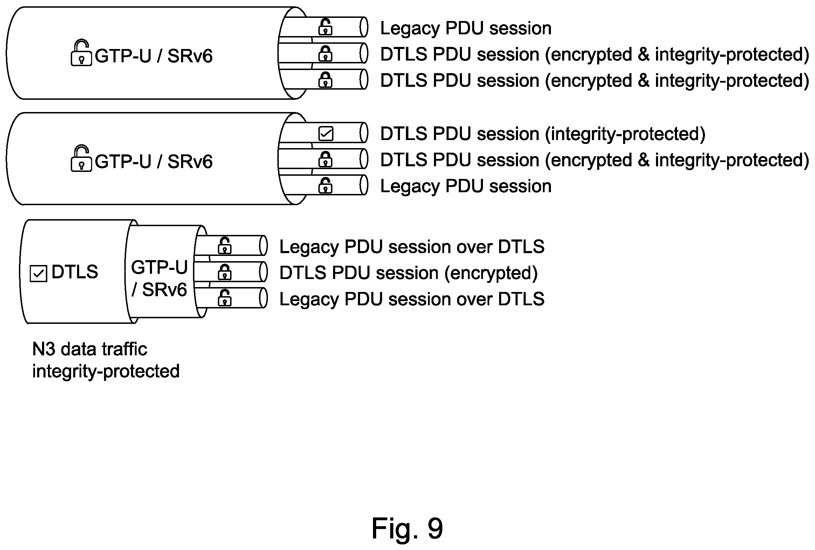

Fig. 9 shows application of DTLS (Datagram Transport Layer Security) to a specific PDU session at the top, different application of DTLS for different PDU sessions in the middle, and application of different cryptographic processing types at different levels at the bottom. A further possibility, which has already been studied in past 3GPP releases, is to use SRv6 (Segment Routing version 6) or other mechanisms to replace the current GTP-U-based (Tunnel-based) UP protocol stack. Other possible improvements are selective UP encryption. Further details can be found in EP25153928, which is incorporated herein. This is illustrated at the top of Fig. 9 with the GTP-U/SRv6 tunnel covering a legacy PDU session, and DTLS PDU sessions (encrypted and integrity protected). Alternatively, it is also possible to apply encryption to some PDU sessions and integrity protection (without encryption) to some other PDU sessions as shown in the middle of Fig. 9. Depending on the scenario and the trust level between the network elements involved, it is also possible to apply integrity protection to a full user plane interface and then selectively apply encryption to specific PDU sessions as shown at the bottom of Fig. 9. Additionally, it is possible to "port" some of the 6G enhancements to 5G.

The upper portion of Fig. 9 shows a single PDU session within an N3 tunnel being protected by DTLS. Even though the underlying transport might already be GTP-U or SRv6, DTLS may be layered specifically on top of one PDU session so that both confidentiality (encryption) and integrity (ensuring the data is unchanged) are preserved for that session alone. The rest of the traffic on the same N3 tunnel may remain unaffected, thereby limiting the cryptographic overhead to the single session that requires it.

The middle portion of Fig. 9 illustrates how different PDU sessions in the same UP tunnel can each receive a distinct level of security. Some sessions may have only integrity protection, meaning they are checked for changes but not encrypted, while other sessions may be fully encrypted, and still others might rely on no additional cryptographic protection at all. This may allow the operator or application to choose an appropriate level of security session by session, depending on factors such as application requirements or subscription policies.

The lower portion of Fig. 9 depicts a layered approach where integrity protection is applied across the entire UP interface, such as the full N3 link, while selective encryption is enabled for specific PDU sessions that need stronger confidentiality. In other words, all traffic benefits from at least integrity checks, but sessions that warrant extra privacy are individually encrypted on top of that integrity layer. This design may balance performance (since not all traffic must be encrypted) and security (since critical sessions can still be fully protected). By combining these approaches, the network can dynamically tailor cryptographic processing to each session's needs without compromising overall performance or security goals.

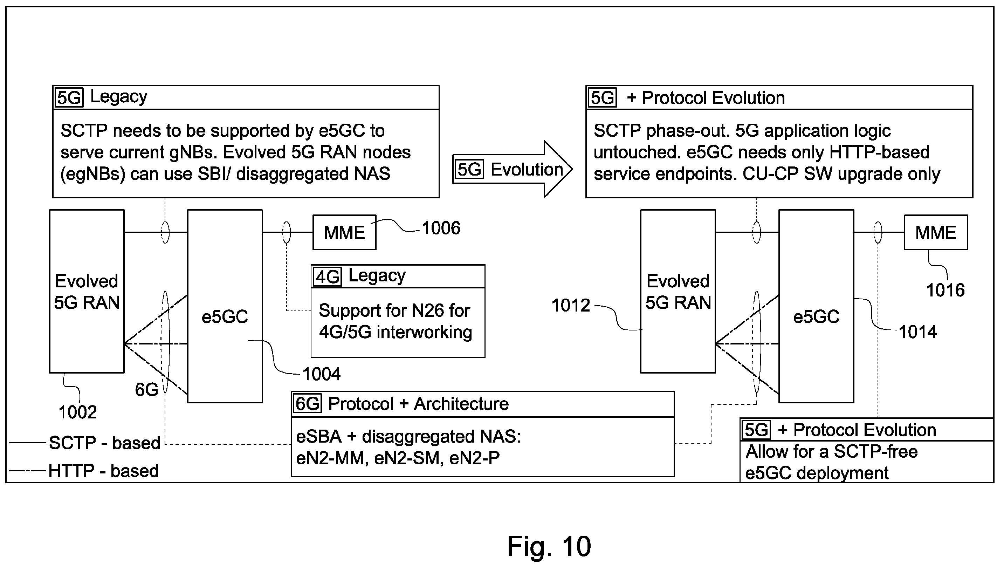

Fig. 10 illustrates porting of 6G enhancements to 5G (legacy NG-AP over HTTP) and 4G (N26 interface) in an example. As shown at the top of Fig. 10 protocol and architecture improvements may complement each other and may be applied in different means. This may be applied not only to 6G, but also to 5G and 4G with the goal to improve deployments. The path to full SBA may be considered key for 6G. 5G and 4G deployments may also benefit from it, potentially without changing legacy system's procedures but (finally) allowing for well-cloudified deployments. Fig. 10 shows at the left a 5G legacy system in which SCTP needs to be supported by e5GC to serve current gNBs. Evolved 5G RAN nodes (egNBs) may use SBl/disaggregated NAS. The evolution may lead to a SCTP phase-out (right of Fig. 10). 5G application logic may be left untouched e5GC needs only HTTP-based service endpoints and CU-CP SW upgrades.

Fig 10 at the left shows the evolved 5G RAN 1002 communicating via HTTP (eSBA and disaggregated NAS: eN2-MM, eN2-SM, eN2-P) with e5GC 1004, which may communicate with the 4G Mobility Management Entity 1006 (with support for N26 for 4G/5G interworking). Fig. 10 shows on the right another evolved 5G-RAN 1012 using the protocol evolution (HTTP) to communicate with the e5GC 1014 and MME 1016.

A protocol evolution may take place. SBI may be upgraded to additionally support HTTP/3 and to keep HTTP/2 support. Multi-Streaming may reduce HoL (Head of Line) blocking and selectable transport characteristics (DATAGRAM, STREAM), security, multi-homing/path may be applied. IPv6 support for CP may be mandated. N1 may be reused and enhanced, e.g. NAS IE (Information Element) encoding framework may be kept such that there is no need to recode all NAS or change the binary encoding of the IEs. For example, the 5G NAS protocol IEs may be taken as starting point and enhanced where needed. N4 may be switched to SBI protocol stack and may reuse part of PFCP, but might not use GTP-U over N4. Associations may be migrated to SBI layer (e.g. API-based, use of SBI endpoints). It can be kept as open option that a PFCP payload could be used. Similar message sizes may be used, and PFCP over HTTP may be enabled. Regarding the N2 and XX-AP (within RAN) protocols (i.e. ASN.1-coded application protocols, e.g. F1-AP, E1-AP) SCTP may be replaced with an eSBA protocol stack, and ASN.1 may be reused as payload. A connection migration feature of QUIC can provide SCTP multi-homing equivalent where needed. A reuse of ASN.1 may take place with similar message payload sizes. SBI towards RAN enables easier, modular, extension of RAN CP for other uses (e.g. Integrated Sensing and Communication, AI/ML (Artificial Intelligence/Machine Learning)). Integrated security may be enabled: No need for IPSec layer for N2/Xn. SBA's OAuth framework can be useful for network sharing and zero-trust support. Cloud-native CU-CP in RAN may be enabled.

The architecture evolution may provide the disaggregated NAS for N1. The UE may address NAS real termination points directly instead of targeting the AMF and trusting it with NAS message forwarding. Multiple NAS security contexts may exist per UE. E2E (end-to-end) security may be enabled. The AMF is then not a single point of entry (+ failure) in the CN anymore. The CN remains the control point for assigning the UE to a CP NF: CN may deliver NAS endpoint(s). N1 may be open to improvements in security and trust architecture (zero-trust, quantum, distributed, etc.). Modular UE and modular NAS enable definition of UE as collection of services/capabilities. NAS modularity already exists in 5G. New functionality can be defined modularly for later releases and generations.

For N2 an API- (Application Programming Interface) based gNB may be enabled. SBA may be leveraged for modular definition of RAN functionality (new and existing). Lessons-learned and knowledge base of cloud-based CN deployment may be applied for DU (Distributed Unit) deployments. An SBA authorization framework could also be used. Whether existing N2 needs to be granularly "API-ed" may be defined and the CU (Central Unit)/DU/RU (Remote Unit) split may be maintained.

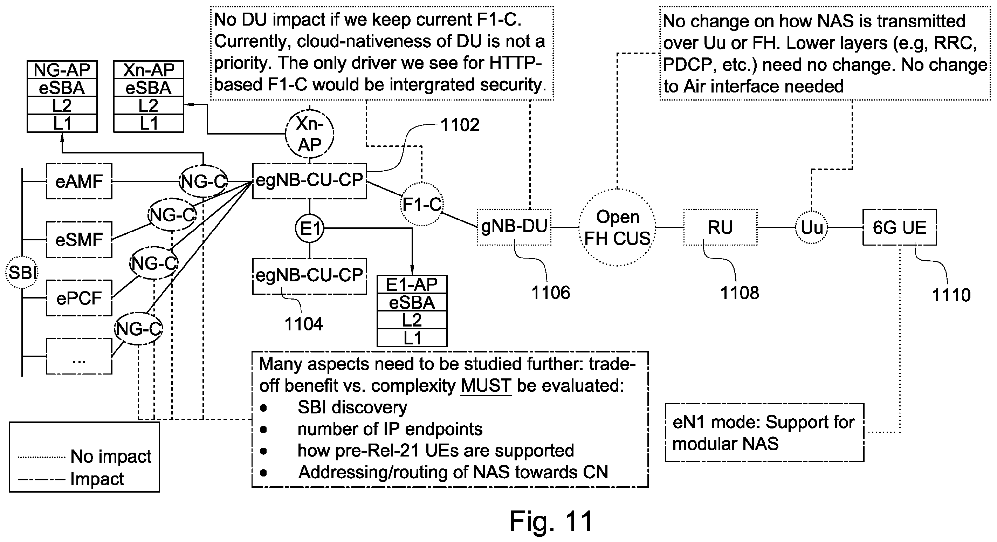

It is even possible to apply most of the change in a way such that the RAN network elements contributing to most of the RAN deployment costs can be reused without any change (DU and RU). In such a case the CU would need a mix of HTTP-based and non-HTTP-based interfaces, but it is nevertheless possible. Fig. 11 depicts an implementation of 6G without impact on DU, RU. Fig. 11 shows an egNB-CU-CP 1102 and an egNB-CU-UP 1104. As shown in Fig. 11 the SBI provide eAMF, ESMF, ePCF, etc., which are the impacted protocol communicating with the respective NG-C interfaces. Many aspects may need to be studied further for 6G, e.g. the tradeoff between benefit and complexity may be evaluated for SBI discovery, the number of IP endpoints, how pre Rel-21 UEs are supported, addressing/routing of NAS towards CN, etc. However, if the current F1-C interface between egNB-CU-CP and gNB-DU 1106 is kept there is no impact on the DU 1106. The cloud-nativeness of the DU might not be considered a priority. The only driver for HTTP-based F1-C may be integrated security. The interface Open FH CUS between the DU 1106 and the RU 1108 may also be left unchanged. No change on how a NAS is transmitted over UU or FH (Front Haul) may occur. The lower layers (e.g. RRC (Radio resource Control), PDCP (Packet Data Convergence Protocol), etc.) may remain unchanged. Likewise, the air interface can be kept. The 6G UE 1110 may use eN1 mode to support modular NAS.

While all of the proposed improvements for 6G can bring benefits, by the time 6G will be deployment-ready, 5G is expected to be used extensively both in the RAN and CN areas of most MNOs (Mobile Network Operators). Furthermore, it is also quite possible that legacy technologies such as 2G, 3G and 4G have been re-farmed and that most of the physical (e.g. frequencies) and network (e.g. CN NFs) are used to provide 5G services. Based on this situation, it is expected that an efficient, cost-effective way of deploying 6G on an ecosystem very strongly dominated by 5G, especially 5G-SA, is needed.

At least some examples therefore use implementation in which 6G is:
- Deployed as a specific slice / set of slices, which is termed "6G-enabled slices".
- For 6G-enabled slices, it is possible to use:
   ∘ 6G-enhanced protocol stacks for CP,
   ∘ 6G-enhanced protocol stacks for UP,
   ∘ Modular NAS (that is, that CP is not only routed to a single AMF per UE, but rather multiple CP entities),
   ∘ 6G-enhanced security (e.g. for modular NAS, UP), and
   ∘ Selective UP encryption.

Relative to the former, it is thus for 6G-enabled slices, it is possible to use enhance (differentiated) procedures and mechanisms that are associated with 6G-enabled slices.

The concept of having a slice is one of the main basic pillars of how the 5GS is defined.

However, current slicing is only designed to support different SLAs (Service Level Agreements) within an MNO. That is, in practice, differentiated QoS and separation from other slices. It is not defined to support different system generations or protocol stacks over the 5GS. It is furthermore currently not possible to use NFs of different system generations in the context of slicing (slicing did not exist before 5G). While "combo NFs" do exist (e.g. SMF and PGW-C, UPF and PGW-U), from 4G perspective they look exactly as the legacy Network Element (NE) ("NF" is a 5G term).

Some advantages of deploying 6G as a slice would be as follows:
- Allow deployment of 6G features only where necessary and when ready. Additional features can be deployed on a need-to basis,
- Where "plain 5G" is enough (e.g. eMBB service), it is possible to just keep using it,
- Easy separation of the CP and UP, as well as the associated protocol stack based on the slice being used, and
- Reuse of slicing-related mobility restrictions to steer UEs to areas where 6G services are available instead of requiring a full network reselection.

An example how slice-based 6G could be realized is shown in the following Figs. with the feature of modular NAS being exemplarily used to depict an example of a deployment of a 6G-capable slice.

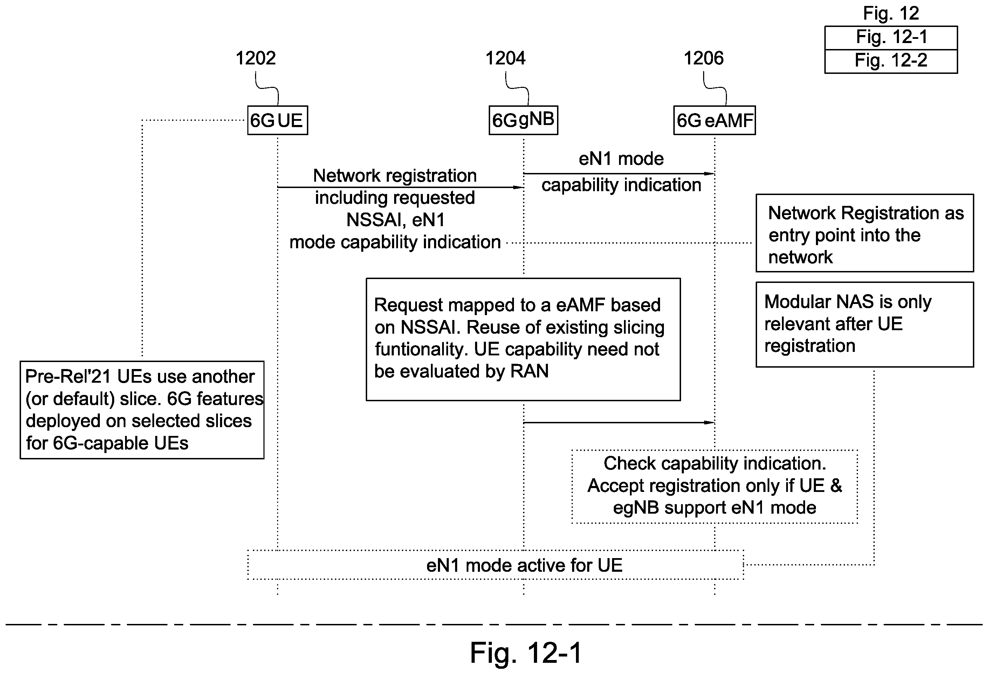

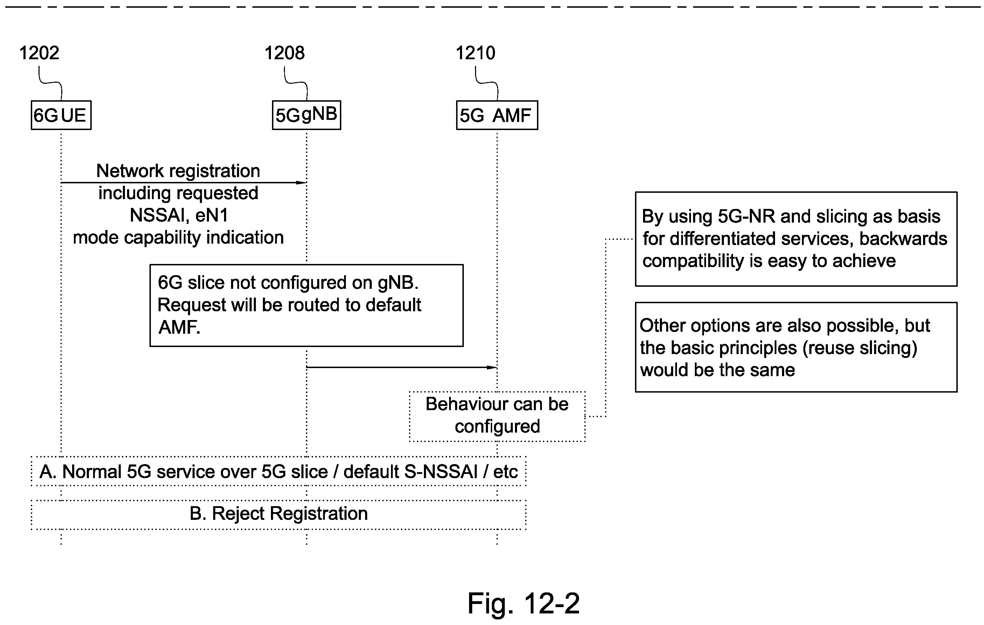

For the case all network elements support 6G, CP and UP can be routed by the 6G-capable RAN towards a 6G-capable AMF. Fig. 12 shows a 6G-capable network E2E at the top and a 6G-capable UE attaching to non-6G-capable network in an example at the bottom. At the top Fig. 12 shows a 6G UE 1202, a 6G egNB 1204 and a 6G eAMF 1206. It is assumed the pre-Rel 21 UEs use another or a default slice and that 6G features are deployed on selected slices for capable UEs. As shown in Fig. 12, the 6G egNB 1204 provides a eN1 mode capability indication to the 6G eAMF 1206 indicating support for modular NAS. In examples, the involved components may communicate information on or about the at least one network slice between the UE, RAN, a management system, and/or CN of the first telecommunication system (be it 5G, 6G or any other generation). The involved components, which may perform the above method 10, may further store the information on the at least one network slice at a RAN node 1204 (any NB) and/or at the 1202 UE. For example, the method 10 may also comprise broadcasting information about the at least one network slice by the RAN. As further shown in Fig. 12 at the top, the 6G UE 1202 may then send a network registration including a requested NSSAI and its eN1 mode capability indication. The network registration is an entry point into the network. In this example, the method 10 comprises communicating an identifier for the at least one network slice or information associated to and/or characterizing the at least one network slice from the UE 1202 to the RAN 1204 for requesting the at least one network slice (e.g. when registering the UE 1202 for services of the at least one network slice), especially based on the stored information on the at least one network slice. In this example the identifier is the NSSAI of the respective network slice.

At the egNB 1204 the request is then mapped to an eAMF based on the NSSAI. The 6G implementation may reuse the existing 5G slicing technology. The UE capability need not be evaluated by the RAN. The request is then sent to the eAMF 1206, which checks the capability indication. In this example the method 10 comprises verifying support capabilities of network nodes involved in providing services of the at least one network slice before service provision using the at least one network slice. Moreover, the method 10 comprises assigning the at least one network slice if the involved network nodes have support capabilities for the least one network slice and otherwise assigning a different network slice for which the involved network nodes have support capabilities. The registration is only accepted if UE 1202 and egNB 1204 both support eN1 mode. If that is the case the eN1 mode is activated. The modular NAS is only relevant after UE registration. In this example, a network function (eAMF 1206) of the first telecommunication system (6G) decides whether the UE 1202 is admitted to using the at least one network slice. It is conceivable that the network load (the slice load) does not allow for another UE although all components would principally support it. It such as case the network function would deny access. The UE may be assigned to a different network slice in case of deciding that the UE is not admitted using the at least one network slice.

It is exemplarily shown that a UE is allocated a 6G-capable slice given that a UE requests a 6G-capable slice, the UE supports the 6G-capable slice, the access network supports the 6G-capable slice, and the CN supports the 6G-capapable slice.

However, a 6G-capable UE may attach to a non-6G-capable network. This case is shown in Fig. 12 at the bottom. The 6G-UE 1202 registers at a 5G gNB 1208 with a 5G AMF 1210. In this case, since 6G is actually a "5G slice", at least considering just the initial steps, the registration procedure and RAT is the same. Hence, when the UE 1202 registers and requests a specific slice the network 1210 can (as in 5G) allocate the UE 1202 to another slice. In this case, the other slice is a "normal" 5G slice. As shown in Fig. 12 at the bottom the registration request from the UE is received at the 5G gNB. In the present example, the 6G slice is not configured at gNB 1208. The request is forwarded to AMF 1210. By using 5G-NR and slicing as basis for differentiated services, backwards compatibility can be achieved. Other options are also conceivable, but the basic principle of reusing slices would be the same. The behavior of AMF 1210 can be configured. As shown in Fig. 12 a normal 5G service over a 5G slice may then be assigned, e.g. using a default NSSAI or the registration may be rejected. For this, current procedures such as AMF relocation can be (re-)used.

It is exemplarily shown that a UE is allocated a 5G-capable slice, especially a default slice, especially served by a default AMF, given that a UE requests a 6G-capable slice, the UE supports the 6G-capable slice, the access networks does not support the 6G-capable slice, and the CN can support the 5G-capapable slice.

Another interesting scenario that can be realized in examples is that of a SW-(Software-) upgraded 5G-RAN. While the 5G-RAN may not be able to support 6G services or 6G functionality such as modular NAS, it may be able to convey its capabilities to the 6G-capable CN elements. In this way, it is possible for the CN to serve 5G UEs with upgraded NFs instead of having to also maintain 5G-specific NFs.

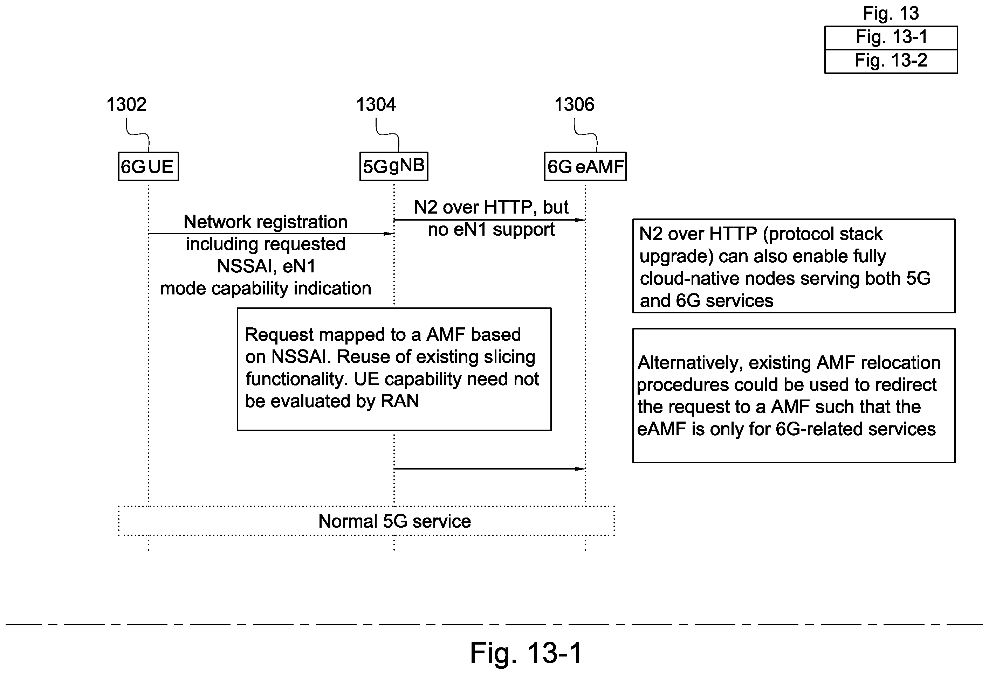

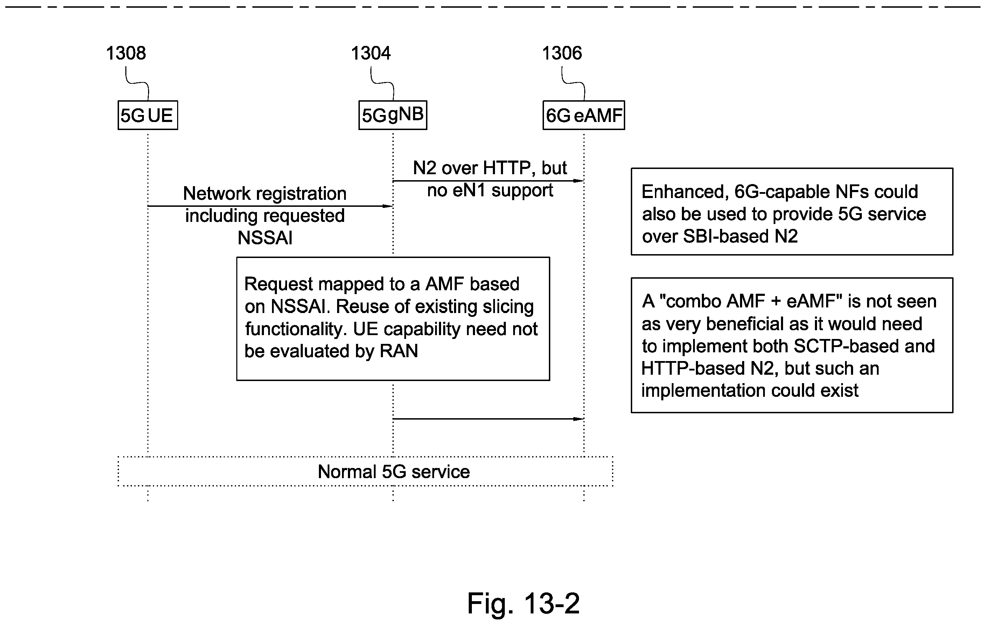

Further scenarios are illustrated in Fig. 13. Fig, 13 shows a 6G-capable **NF** serving 6G-capable UE over 5G-capable RAN in an example at the top and a 6G-capable **NF** serving 5G-capable UE over 5G-capable RAN in an example at the bottom. Fig. 13 shows a 6G UE 1302 sending a registration request to a 5G gNB 1304. The gNB1304 uses N2 over HTTP to communicate with a 6G eAMF 1306 but does not support eN1. N2 over HTTP (protocol stack upgrade) can also enable fully cloud-native nodes serving both 5G and 6G services. As shown in Fig. 13, gNB 1304 maps the request to an AMF based on the NSSAI. Existing slicing functionality is reused, and the UE capability need not be evaluated by RAN 1304. The eAMF1306 then assigns a normal 5G service. In such an example, existing AMF relocation procedures could be used to redirect the request to a AMF, such that the eAMF is only used for 6G-related services. In this case the method 10 further comprises converting or reallocating between network functions of the first and second telecommunication systems.

Another example is depicted at the bottom of Fig. 13. Here a 5G UE 1308 registers at the 5G gNB 1304. The request is mapped to an AMF similar to the scenario at the top of Fig. 13. The 5G-capable UE 1302 can be served by the 6G-capable NF 1306 (or even a "combo AMF and eAMF", in which case the indication from RAN would not be necessary as the SCTP-based N2 is implicitly already an indication that 5G is used). Enhanced, 6G-capable NFs could also be used to provide 5G service over SBI-based N2. A combined AMF and eAMF might not be beneficial for all cases as it would need to implement both SCTP-based and HTTP-based N2, but such an implementation could exist at least in some examples. The first telecommunication system (e.g. 5GS) and the second telecommunication system (e.g. 6GS) may share components, especially access network, AN (e.g. RAN) and/or CN (e.g. NFs) components. The shared components are then used by both the first tele-communication system and the second telecommunication system.

In examples, the at least one network slice may be characterized, compared to the first telecommunication system, by one or more elements of the group of an enhanced/specific protocol stack for the control plane (CP); an enhanced/specific protocol stack for the user plane (UP); a modular NAS; enhanced/specific mechanisms, especially security mechanisms; enhanced/specific procedures or selective user plane encryption.

It is thus shown that application of slicing-based 6G enables support for backwards-compatibility which still allowing 6G services to be deployed and offered in an efficient and flexible manner.

Examples may hence make use of one or more of the following features.
- A slice can be associated to using a specific UP and/or CP protocol stack,
- A slice can be associated to using a specific system generation,
- A slice can be associated to using a specific mode of operation (e.g. modular NAS),
- A slice can be associated communicating by default with specific NFs besides an AMF (e.g. the "default SMF" for a given slice can be configured),
- A slice can be associated with specific security settings regarding any of the items above,
- Sending to the UE and/or a RAN node 6G slice association information such that the UE and/or RAN node knows beforehand how to treat specific slices, and
- Using some of the bits in the current S-NSSAI identifier to implicitly include some of the above information. The method 10 may hence further comprises indicating one or more of the features supported by the at least one network slice using the identifier, e.g. a NSSAI.

Said information can/may be provisioned by the CN or a management system, such that the RAN can correctly associate what parameters, protocol stacks and/or modes of operation should be used with a given slice such that when a given UE registers, it can be directed
- to the right NF,
- with the right protocol stack, and
- using the right parameters.

Similarly, said information can/may be provisioned by the CN to the UE or pre-provisioned in the UE (e.g. within the USIM), such that when a given UE registers, it provides the network with parameters associated with a 6G-capable slice.

Thus, it is shown that information related to a 6G-capable slice is communicated (e.g. provisioned, configured) to a core network, CN, a management system, a radio access network, RAN, and/or user equipment, UE, of the first telecommunication system. Especially, that the information contains an association between a given slice and specific features of the 6G system.

Slice association information can thus be provisioned in AN nodes and/or UEs, such that 6G-enabled slices can co-exist with legacy slices.

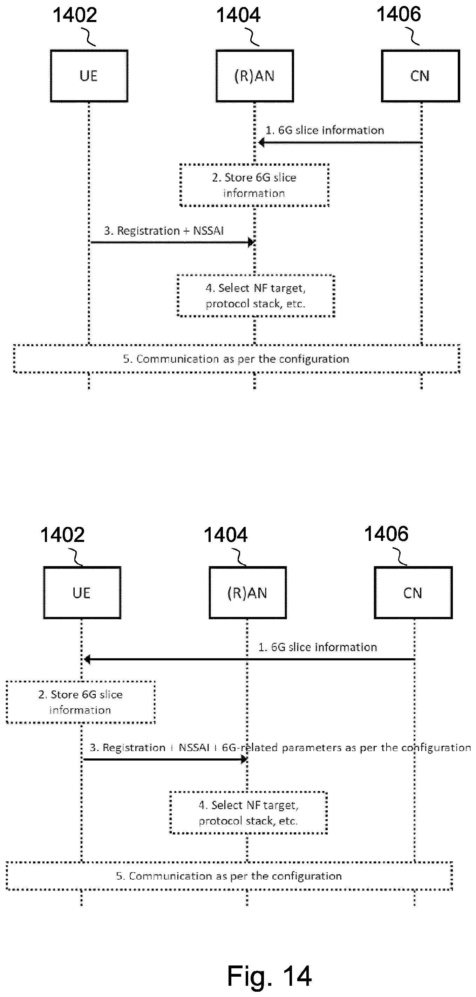

Fig. 14 depicts an example of a RAN configuration at the top and an example of a UE configuration at the bottom.

Fig. 14 illustrates a telecommunication system with a UE 1402, (R)AN 1404, and a CN 1406. In this example the CN 1406 provides the 6G slice information to the AN 1404, which stores the 6G slice information. The UE 1402 registers at the AN 1404 using an according request including an NSSAI. The AN 1404 selects the **NF** target, protocol stack, etc. Finally, the communication is established as per configuration.

Additionally, by configuring the UE 1402, it is possible to set the UE 1402 to request a specific NSSAI for 6G-related services. In this way, the need for AMF redirection can be reduced as the UE 1402 should, under normal circumstances, request the right slice with the right parameters. Such a scenario is shown in Fig. 14 at the bottom. In this example the CN 1406 provides the 6G slice information to the UE 1402, which stores the 6G slice information. The UE 1402 registers at the AN 1404 using an according request including an NSSAI and 6G-related parameters as per the configuration. The AN 1404 selects the NF target, protocol stack, etc. Finally, the communication is established as per configuration.

Furthermore, it is possible to further optimize the UE registration to minimize the chance of 6G parameters being used where not available by configuring RAN to signal (e.g. MIB (Master Information Block), SIB (System Information Block), cell broadcast means) that it can provide 6G-capable slice(s). As outlined above, the respective method 10 then comprises broadcasting information about the at least one network slice, which, in the present example, is the 6G slice. In this case, the UE can take this information into account before deciding to send a registration message for 6G-capable services / slices.

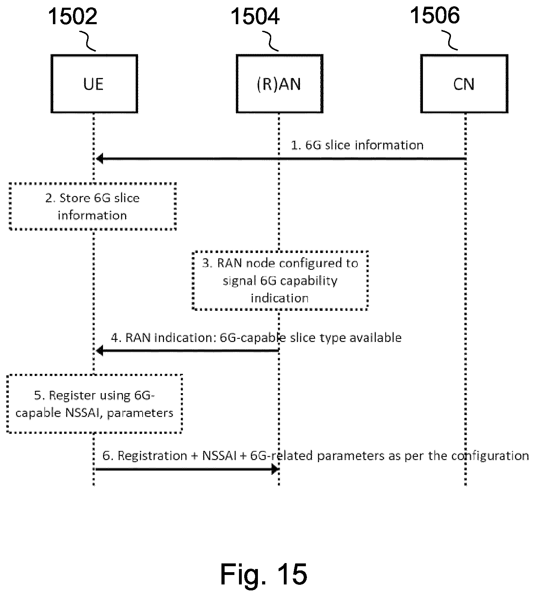

Fig. 15 shows a broadcast of 6G-capable slices by RAN in an example. Fig. 15 illustrates a telecommunication system with a UE 1502, (R)AN 1504, and a CN 1506. In this example the CN 1506 provides the 6G slice information to the UE 1502, which stores the 6G slice information. AN 1504 is configured to signal 6G capability indication. The UE 1502 received the RAN indication that the 6G-capable slice type is available. The UE 1502 then prepares registration using the 6G capable NSSAI and appropriate parameters. The UE 1502 then registers at the AN 1504 using an according request including an NSSAI and 6G-related parameters as per the configuration.

Examples may enable communication and storage of slice association information in a UE and/or RAN to associate slice and 6G-related information. Furthermore, examples may enable a signaling of 6G-related cell capability information by RAN (e.g. SIB, MIB, cell broadcast).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for providing services of multiple generations of telecommunication systems, the method (10) comprising
enabling (11) services of a first telecommunication system, wherein the first telecommunication system supports network slicing and wherein the network slices are configurable to provide different service characteristics; and
supporting (12) a second telecommunication system, the second telecommunication system being a different generation of telecommunication systems than the first telecommunication system,
the first telecommunication system being configured to provide access to at least one feature of the second telecommunication system using at least one network slice.

2. The method (10) of claim 1, wherein the first telecommunication system is a 5^{th} generation system according to the specifications of the 3^{rd} Generation Partnership Project, 3GPP, and wherein the second telecommunication system is a 6^{th} or higher generation system according to the specifications of the 3GPP.

3. The method (10) of one of the claims 1 or 2 further comprising communicating information on the at least one network slice between a core network, CN, a management system, a radio access network, RAN, and/or user equipment, UE, of the first telecommunication system.

4. The method (10) of one of the claims 1 to 3, further comprising storing the information on the at least one network slice at a RAN node and/or at a UE of the first telecommunication system.

5. The method (10) of one of the claims 1 to 4 further comprising broadcasting information about the at least one network slice by the RAN of the first telecommunication system.

6. The method (10) of one of the claims 1 to 5 further comprising communicating an identifier for the at least one network slice or information associated to and/or characterizing the at least one network slice from the UE to the RAN for requesting the at least one network slice, especially based on the stored information on the at least one network slice.

7. The method (10) of one of the claims 1 to 6 further comprising verifying support capabilities of network nodes involved in providing services of the at least one network slice before service provision using the at least one network slice.

8. The method (10) of claim 7, further comprising assigning the at least one network slice if the involved network nodes have support capabilities for the least one network slice and otherwise assigning a different network slice for which the involved network nodes have support capabilities.

9. The method (10) of one of the claims 1 to 8, wherein the at least one network slice is characterized, compared to the first telecommunication system, by one or more elements of the group of a specific protocol stack for the control plane, a specific protocol stack for the user plane, a modular non-access stratum, NAS, specific mechanisms, specific procedures or selective user plane encryption.

10. The method (10) of one of the claims 1 to 9, wherein the first telecommunication system and the second telecommunication system share components, especially access network, AN, core network, CN components, especially access network, AN, components, especially radio access network, RAN, components especially network functions, NFs, wherein shared components are used by both the first telecommunication system and the second telecommunication system.

11. The method (10) of one of the claims 1 to 10, further comprising converting between network functions of the first and second telecommunication systems.

12. The method (10) of one of the claims 1 to 11, further comprising deciding by a network function of the first telecommunication system, whether a UE is admitted using the at least one network slice, and assigning the UE to a different network slice in case of deciding that the UE is not admitted using the at least one network slice.

13. A computer program having a program code for performing one of the methods (10) of one of the claims 1 to 12, when the computer program is executed on a computer, a processor, or a programmable hardware component.

14. An apparatus (20) for a telecommunication system, the apparatus (20) comprising one or more interfaces (22) configured to communicate in the telecommunication system; and one or more processing devices (24) configured to perform one of the methods (10) of one of the claims 1 to 12.

15. The apparatus (20) of claim 14 being comprised in a UE, a AN node or a CN node of the telecommunication system.

## Amended claims

### Amended claims in accordance with Rule 137(2) EPC.

1. A method (10) for providing services of multiple generations of telecommunication systems, the method (10) comprising
enabling (11) services of a first telecommunication system, wherein the first telecommunication system supports network slicing and wherein the network slices are configurable to provide different service characteristics; and
supporting (12) a second telecommunication system, the second telecommunication system being a different generation of telecommunication systems than the first telecommunication system,
the first telecommunication system being configured to provide access to at least one feature of the second telecommunication system within at least one network slice by deploying said feature in the at least one network slice,
wherein the at least one network slice is characterized, compared to the first telecommunication system, by one or more elements of the group of a specific protocol stack for the control plane, a specific protocol stack for the user plane, a modular non-access stratum, NAS, specific mechanisms, specific procedures or selective user plane encryption.

2. The method (10) of claim 1, wherein the first telecommunication system is a 5^{th} generation system according to the specifications of the 3^{rd} Generation Partnership Project, 3GPP, and wherein the second telecommunication system is a 6^{th} or higher generation system according to the specifications of the 3GPP.

3. The method (10) of one of the claims 1 or 2 further comprising communicating information on the at least one network slice between a core network, CN, a management system, a radio access network, RAN, and/or user equipment, UE, of the first telecommunication system.

4. The method (10) of one of the claims 1 to 3, further comprising storing the information on the at least one network slice at a RAN node and/or at a UE of the first telecommunication system.

5. The method (10) of one of the claims 1 to 4 further comprising broadcasting information about the at least one network slice by the RAN of the first telecommunication system.

6. The method (10) of one of the claims 1 to 5 further comprising communicating an identifier for the at least one network slice or information associated to and/or characterizing the at least one network slice from the UE to the RAN for requesting the at least one network slice, especially based on the stored information on the at least one network slice.

7. The method (10) of one of the claims 1 to 6 further comprising verifying support capabilities of network nodes involved in providing services of the at least one network slice before service provision using the at least one network slice.

8. The method (10) of claim 7, further comprising assigning the at least one network slice if the involved network nodes have support capabilities for the least one network slice and otherwise assigning a different network slice for which the involved network nodes have support capabilities.

9. The method (10) of one of the claims 1 to 8, wherein the first telecommunication system and the second telecommunication system share components, especially access network, AN, core network, CN components, especially access network, AN, components, especially radio access network, RAN, components especially network functions, NFs, wherein shared components are used by both the first telecommunication system and the second telecommunication system.

10. The method (10) of one of the claims 1 to 9, further comprising converting between network functions of the first and second telecommunication systems.

11. The method (10) of one of the claims 1 to 10, further comprising deciding by a network function of the first telecommunication system, whether a UE is admitted using the at least one network slice, and assigning the UE to a different network slice in case of deciding that the UE is not admitted using the at least one network slice.

12. A computer program having a program code for performing one of the methods (10) of one of the claims 1 to 11, when the computer program is executed on a computer, a processor, or a programmable hardware component.

13. An apparatus (20) for a telecommunication system, the apparatus (20) comprising one or more interfaces (22) configured to communicate in the telecommunication system; and one or more processing devices (24) configured to perform one of the methods (10) of one of the claims 1 to 11.

14. The apparatus (20) of claim 13 being comprised in a UE, a AN node or a CN node of the telecommunication system.
